# EUROPÄISCHE PATENTSCHRIFT

(11) **EP 4 204 770 B1**
(45) Veröffentlichungstag und Bekanntmachung des Hinweises auf die Patenterteilung: **24.09.2025**
(21) Anmeldenummer: 21794782.9
(22) Anmeldetag: 14.10.2021
(51) Int. Cl.: G01F 1/66, G01F 15/14

(54) **DURCHFLUSSMESSER**
FLOW METER
DÉBITMÈTRE

(30) Priorität: 14.10.2020 DE 102020127027; 17.11.2020 DE 102020130357; 18.11.2020 DE 102020130517
(43) Veröffentlichungstag der Anmeldung: 05.07.2023
(73) Patentinhaber: GWF AG, 6005 Luzern (CH)
(72) Erfinder: HELFENSTEIN, Markus, 6004 Luzern (CH); STRASSER, Florian, 6006 Luzern (CH)
(74) Vertreter: Winter, Brandl - Partnerschaft mbB
(86) Internationale Anmeldenummer: PCT/EP2021/078548
(87) Internationale Veröffentlichungsnummer: WO 2022/079214

(56) Entgegenhaltungen:
- EP-A1- 2 236 998
- EP-A1- 2 840 362
- EP-A1- 3 591 347
- EP-A1- 3 611 480
- WO-A1-2018/011371
- US-A1- 2019 368 907

## Beschreibung

Die Erfindung betrifft einen Durchflussmesser zur Messung des Durchflusses von Fluiden in einer Rohrleitung oder dergleichen gemäß dem Oberbegriff des Patentanspruches 1.

Durchflussmesser können beispielsweise zwei Ultraschall-Wandler aufweisen, die als so genannte "Clip-On-Lösung" im Abstand zueinander an ein Rohrstück der Rohrleitung eingesetzt werden, wobei beide Wandler als Sender und Empfänger wirken. Die Messsignale werden schräg durch die Rohrstückwandung hindurch in das Fluid eingekoppelt.

Aus der Laufzeit der Messsignale vom Sender zum Empfänger kann dann in an sich bekannter Weise die Durchflussgeschwindigkeit bestimmt werden. Derartige Durchflussmesser sind beispielsweise in den Druckschriften WO 2004/036151 A1 und DE 10 2005 057 888 beschrieben.

Nachteilig bei den Clip-On-Durchflussmessern ist, dass die Messsignale die Wandung des Messkanals durchsetzen, so dass bei unterschiedlichen Materialien, aus denen der Messkanal ausgebildet sein kann, auch unterschiedliche Messsignale erhalten werden, so dass der Materialeinfluss bei der Messsignalauswertung berücksichtigt werden muss.

Weiterhin bekannt sind Lösungen mit einem Messeinsatz, in den die Ultraschall-Wandler aufgenommen sind. Dieser Messeinsatz wird in eine Ausnehmung eines Rohrstückes/Messkanals eingesetzt, wobei der eigentliche Messkanal auch ein Teil dieses Messeinsatzes sein kann.

Eine derartige Lösung ist beispielsweise in der DE 101 20 355 A1 offenbart, wobei die beiden Ultraschall-Wandler in Fließrichtung im Abstand zueinander und an gegenüber liegende Seiten des Messkanals angeordnet sind.

In der EP 2 306 160 A1 ist ein Durchflussmesser/Durchflusszähler offenbart, bei dem der Messeinsatz sowohl die Ultraschall-Wandler aufnimmt als auch den eigentlichen Messkanal ausbildet. Dieser Messeinsatz wird an einem tangential verlaufenden Flansch eines Rohrstückes eines Gehäuses des Durchflussmessers befestigt. Dabei taucht durch eine von dem Flansch umgegriffene Ausnehmung des Rohrstückes ein den Messkanal ausbildender Profilkörper ein, der die Strömung innerhalb des Messbereiches beeinflusst und an dem zusätzlich Reflektoren für die Messsignale vorgesehen sind. Bei dieser Lösung sind die beiden Ultraschall-Wandler in einem topfförmigen Gehäuseteil des Messeinsatzes angeordnet, das zur Strömung hin geschlossen ist und in diese eintaucht.

Eine ähnliche Lösung ist in der EP 2 386 836 B1 gezeigt. Bei diesem Ausführungsbeispiel trägt der Messeinsatz zwei in Strömungsrichtung versetzt zueinander angeordnete Ultraschall-Wandler, die ebenfalls in einem topfförmigen Gehäuseteil aufgenommen sind und durch eine von einem Flansch umgriffene Öffnung eines Rohrstückes eines Gehäuses in den Messkanal hinein kragen. Die Strömungsführung innerhalb des Messkanals wird durch einen von der Stirnseite des Gehäuses her einsetzbaren Gehäuseeinsatz bestimmt, der auch Reflektoren für die Ultraschallsignale trägt, so dass der Ultraschall von einem der Ultraschall-Wandler abgegeben und über die Reflektoren zu dem anderen, beispielsweise stromabwärts gelegenen Ultraschall-Wandler reflektiert wird. Selbstverständlich kann die Signalführung auch in umgekehrter Richtung erfolgen.

In der Druckschrift EP 0 890 826 B1 ist ein Durchflussmesser beschrieben, bei dem ebenfalls im Bereich eines Rohrstückes eines Gehäuses ein Messeinsatz an einen tangential verlaufenden Flansch angesetzt wird. Der Messeinsatz trägt zwei Ultraschall-Wandler, die in Ausnehmungen eines Bodens eines Gehäuseteiles eingesetzt sind und dort mittels jeweils einer Dichtung abgedichtet sind. Der gesamte Messeinsatz wird dann gegenüber dem Flansch mit einer weiteren umlaufenden Dichtung abgedichtet, die beide Ultraschall-Wandler umgreift. Auch bei diesem Ausführungsbeispiel wird der Messkanal durch einen Messeinsatz ausgebildet, der durch die vom Flansch umgriffene Ausnehmung in das Rohrstück des Gehäuses eingesetzt wird. Eine ähnliche Lösung ist in der US 8,424,392 B2 und der EP 3 748 311 A1 beschrieben.

Die Druckschrift DE 199 44 411 A1 offenbart einen Durchflussmesser, bei dem in einem Messrohr ein Einsatz ausgebildet ist, durch den der Querschnitt des Messrohrs länglich ausgebildet ist. Dabei sind zwei Ultraschallwandler in Strömungsrichtung versetzt an den gegenüberliegenden Seiten des Messkanals angeordnet.

In der EP 0 650 034 A1 wird ein Durchflussmesser beschrieben, bei dem ebenfalls zwei Ultraschallwandler versetzt zueinander angeordnet sind. Gegenüberliegend ist jeweils ein Reflektor vorgesehen, der an Schrägflächen des Messkanals angeordnet ist.

Bei allen vorbeschriebenen Lösungen sind die Reflektoren diametral zu den Ultraschall-Wandlern ausgebildet, so dass zumindest zwei Reflektoren vorgesehen sein müssen, um die Ultraschallsignale zu führen.

Bei dem Durchflussmesser gemäß der EP 0 890 826 B1 sind die beiden Ultraschall-Wandler jeweils in einem Sensorgehäuse, in der Folge Koppelstück genannt, angeordnet und kragen in Radialrichtung in den Messkanal hinein, so dass sie von dem Fluid umströmt sind.

In der US 2013/167 655 A1 und der DE 10 2004 061 404 A1 sind jeweils Durchflussmesser offenbart, bei denen zwei Ultraschall-Sensoren schräg angestellt in einem auf einen Messkanal aufgesetzten Messgehäuse angeordnet sind, das zum Messkanal hin offen ist, so dass im Übergangsbereich zum Messgehäuse Verwirbelungen auftreten können.

Nachteilig bei derartigen Lösungen ist, dass entweder die Ultraschall-Wandler mit ihrem Koppelstück direkt in der Strömung angeordnet sind oder aber die Ultraschall-Wandler umgebende, beispielsweise topfförmige Gehäuseteile in die Strömung hinein ragen. An den in die Strömung hineinragenden oder zurückspringenden Ultraschallwandlern oder Gehäuseteilen kann es zu Ablösungen und/oder Wirbeln kommen, die unter anderem in Abhängigkeit von der Strömungsgeschwindigkeit zu Messfehlern führen.

Durchflussmesser, bei denen ein Messeinsatz in Axialrichtung in einem Messkanal eingeschoben wird, haben den Nachteil, dass diese Messeinsätze in der Geometrie sehr begrenzt sind, da das axiale Einschieben voraussetzt, dass der Messeinsatz und der Messkanal ohne Hinterschneidungen ausgebildet sind. Zudem lassen sich Konifizierungen im Einlass- und Auslassbereich nur schwer oder allenfalls mit erheblicher Wandstärke des Messeinsatzes realisieren.

Die EP 2 696 174 A1 offenbart einen Durchflussmesser mit zwei Ultraschall-Sensoren, die an einen Messkanal angesetzt sind, wobei die Ein- und Auskopplung der Messsignale in bzw. aus dem Fluid über jeweils ein Koppelstück erfolgt, das bündig in die Umfangswandung des Messkanals eingesetzt ist.

In der auf die Anmelderin zurückgehenden WO 2018/011 371 A1 wird ein Durchflussmesser beschrieben, bei dem die Ein- und Auskopplung von Messsignalen zweier zueinander beabstandeter Messsensoren über ein gemeinsames oder jeweils ein Koppelstück erfolgt, das den oder die Sensoren/Wandler trägt.

In der parallelen Patentanmeldung WO 2018/011 372 A1 wird ein Durchflussmesser mit einem ovalen oder trapezförmigen Messkanal beschrieben.

Beide Durchflussmesserkonzepte gewährleisten eine gegenüber dem vorgenannten Stand der Technik verbesserte Durchströmung des Durchflussmessers bei verbesserter Messgenauigkeit.

In der Druckschrift WO 2016/012024 A1 ist ein Durchflussmesser mit strömungsoptimiertem Messkanal beschrieben, der jedoch einen sehr komplexen Aufbau hat.

Die Druckschrift WO 2011/127934 A1 offenbart einen Durchflussmesser beschrieben, bei dem die Ultraschall-Sensoren in einem Gehäuse aufgenommen sind, das seinerseits über einen Verriegelungsmechanismus mit einem Messkanal verbunden ist. Ein derartiger Durchflussmesser hat einen sehr komplexen Aufbau, da auch die Reflektoren zur Umleitung des Messstrahls an dem Gehäuse ausgebildet sind und somit in Radialrichtung in den lichten Querschnitt des Messkanals eintauchen und somit die Strömung ungünstig beeinflussen.

In der EP 2 888 560 A1 wird ein Durchflussmesser beschrieben, bei dem die beiden Ultraschall-Sensoren ebenfalls in einem geschlossenen Gehäuse angeordnet sind, das durch eine radiale Ausnehmung hindurch in einen Messkanal eintaucht. Diese eintauchenden Bereiche stören wiederum die Durchströmung des Messkanals. Des Weiteren dienen diese in das Innere des Messkanals eintauchenden Bereiche des Gehäuses dazu, einen in Axialrichtung in den Messkanal eingesetzten Messeinsatz festzulegen. Dieser Messeinsatz trägt Reflektoren zur Umlenkung der Messstrahlen. Ähnlich wie bei den vorbeschriebenen Lösungen müssen der Messkanal und der Messeinsatz so auf einander abgestimmt sein, dass das axiale, stirnseitige Einsetzen des Messeinsatzes ermöglicht ist.

Die europäische Patentanmeldung EP 3 818 343 A1 ist auf den Aufbau eines Gehäuses mit der darin aufgenommenen Steuerung gerichtet. Diese hat ein Haupt-PCB mit einer CPU und einem Kommunikationsschaltkreis, die in einem Modulgehäuse aufgenommen sind, das seinerseits in dem Gehäuse aufgenommen ist, in dem des Weiteren noch ein Mess-PCB vorgesehen ist. Die beiden PCBs sind über eine Leistungs- und Kommunikationsverbindung mit einander verbunden, wobei im Gehäuse auch eine Stromversorgung der Komponenten aufgenommen ist.

Ein derartiger Gehäuseaufbau ist äußerst komplex und bedarf daher eines erheblichen vorrichtungstechnischen Aufwands.

Das europäische Patent EP 2 414 789 B1 betrifft einen Durchflussmesser, bei dem die Ultraschall-Sensoren direkt auf einem PCB angeordnet sind. Ein derartiges Konzept setzt voraus, dass das PCB und damit auch die Sensoren zur Gewährleistung einer hinreichenden Signalqualität sehr nahe am Strömungskanal positioniert sind, so dass hinsichtlich des Designs wenig Freiheit verbleibt. Ähnliches gilt für das Konzept gemäß der EP 3 550 272 B1, bei dem die Ultraschall-Sensoren an der Unterseite eines PCB angeordnet sind.

In der EP 2 888 561 B1 ist ein Ultraschall-Durchflussmesser beschrieben, bei dem die elektrische Kontaktierung der Ultraschall-Sensoren über elastische Verbinder erfolgt, die mit einer isolierenden Trägeranordnung mechanisch verbunden sind. Ein derartiges Konzept bedarf ebenfalls eines erheblichen vorrichtungstechnischen Aufwands. Im Übrigen entspricht die Offenbarung der EP 2 888 561 B1 derjenigen der vorbeschriebenen europäischen Patentanmeldung EP 2 888 560 B1.

Das europäische Patent EP 1 544 582 B1 betrifft einen Durchflussmesser, bei dem ebenfalls ein Messeinsatz in Axialrichtung in einen Messkanal eingesetzt wird. Des Weiteren ist vorausgesetzt, dass der Querschnitt des Messkanals sechseckig, achteckig oder im Wesentlichen in Form eines Quadrats mit verrundeten Ecken ausgebildet ist. Auch ein derartiger Messeinsatz ist nur mit einem erheblichen vorrichtungstechnischen Aufwand und einer entsprechenden Auslegung des Messkanalquerschnitts realisierbar.

Weiterer Stand der Technik ist aus der EP 3 591 347 A1, EP 2 840 362 A1, EP 2 236 988 A1, EP 3 611 480 A1 sowie aus der US 2019 / 368 907 A1 bekannt.

Demgegenüber liegt der Erfindung die Aufgabe zugrunde, den Durchflussmesser im Hinblick auf eine weitere Verringerung des vorrichtungstechnischen Aufwands bei optimaler Messgenauigkeit weiterzubilden.

Diese Aufgabe wird durch einen Durchflussmesser mit den Merkmalen des Patentanspruches 1 gelöst.

Vorteilhafte Weiterbildungen der Erfindung sind Gegenstand der Unteransprüche.

Der erfindungsgemäße Durchflussmesser hat einen an eine von einem Fluid durchströmte Rohrleitung ansetzbaren Strömungskanal, an dem eine Messeinheit gehalten ist, die mit zumindest zwei zu einander beabstandete, als Ultraschall-Wandlern ausgebildete Sensoren hat, die ihre Messsignale durch zumindest eine Ausnehmung des Strömungskanals hindurch ein- bzw. auskoppeln. Der Durchflussmesser hat des Weiteren eine in einem Steuergehäuse aufgenommene Steuereinheit zur Ansteuerung der Sensoren und zur Verarbeitung der Messsignale. Erfindungsgemäß ist jeder Sensor mit jeweils einer Kontaktplatine kontaktiert, die ihrerseits mit einem Haupt-PCB der Steuereinheit verbunden sind, wobei die Sensoren auf schräg angestellten Stützflächen eines Messkanaloberteils befestigt sind.

Diese Ausführung ermöglicht eine sehr einfache Kontaktierung der Sensoren, wobei diese beispielsweise stoffschlüssig oder kraftschlüssig erfolgen kann. Die Kontaktplatinen können dabei als gesonderte Elemente ausgeführt sein. Alternativ ist es auch möglich, die Kontaktplatinen als Teil eines Kunststoff-Formkörpers auszuführen, über die der Sensor bzw. der Kontaktplatinenbereich elektrisch oder signaltechnisch mit dem Haupt-PCB verbunden ist. Prinzipiell ist es auch möglich, die Kontaktplatinen über Kabel oder dergleichen mit dem Haupt-PCB zu verbinden.

Bei einem besonders bevorzugten Ausführungsbeispiel sind die Kontaktplatinen mit dem Sensor verlötet oder verklebt, wobei Sensorelektroden im Bereich einer vom Boden des Steuergehäuses oder des Messkanaloberteils entfernten Großfläche und/oder entlang einer Umfangswandung des Sensors ausgebildet sind. Dies bedarf einer Sonderbauweise des Sensors, hat jedoch den erheblichen Vorteil, dass die Kontaktierung von einer Seite her auf einfache Weise erfolgen kann.

Die Relativpositionierung der Kontaktplatinen mit Bezug zum Sensor ist besonders einfach, wenn beispielsweise an den Kontaktplatinen Passausnehmungen ausgebildet sind, in die gehäuseseitige Passstifte eintauchen. In kinematischer Umkehr ist es natürlich auch möglich, die Passstifte an den Kontaktplatinen und die Passausnehmungen gehäuseseitig, beispielsweise am Steuergehäuse oder an einem Messkanaloberteil auszubilden.

Bei einem bevorzugten Ausführungsbeispiel der Erfindung ist das Steuergehäuse mit einem Gehäusedeckel ausgeführt, der einen Blick auf ein Display freigibt.

Die Befestigung dieses Gehäusedeckels an dem Steuergehäuse ist besonders einfach, wenn ein mehrteiliger Schieberahmen vorgesehen ist, über den der Gehäusedeckel an dem Steuergehäuse festgelegt ist.

Gemäß einem weiteren Aspekt der Erfindung ist ein Messkanaleinsatz mit einem Messkanaloberteil und einem Messkanalunterteil ausgeführt über Verbindungsbolzen mit dem Strömungskanal verbunden. Auf diese Weise kann auch das Steuergehäuse mit dem Strömungskanal verbunden werden.

Das Ansetzen von Werkzeugen zur Verbindung des Durchflussmessers mit einer Rohrleitung ist besonders einfach, wenn das Steuergehäuse zu Anschlussstutzen des Strömungskanals hin konifiziert ist.

Erfindungsgemäß wird es bevorzugt, wenn der Messkanaleinsatz und optional auch der Strömungskanal aus Kunststoff gefertigt sind.

Der Aufbau der Steuereinheit ist besonders kompakt, wenn eine Batterie an einer zum Messkanaleinsatz hin weisenden Großfläche eines Haupt-PCB kontaktiert/befestigt ist.

Dabei wird es besonders bevorzugt, wenn die Batterie - je nach Batterietyp - mit ihrer Längsachse quer oder parallel zur Durchströmungsrichtung im Steuergehäuse angeordnet ist.

Gemäß einem weiteren Aspekt der Erfindung ist im Steuergehäuse neben dem Haupt-PCB auch eine Displayeinheit (EDA) und ein Kommunikationsmodul aufgenommen, wobei diese vorzugsweise etwa im Parallelabstand zu einem Gehäusedeckel hin versetzt mit Bezug zum Haupt-PCB angeordnet sind.

In dem Fall, in dem ein Kommunikationsmodul vorgesehen ist, kann dieses mit einer integrierten Antenne ausgeführt sein, die vom Gehäusedeckel überdeckt ist.

Diese Befestigung kann stoffschlüssig, beispielsweise durch Kleben oder durch Verspannung erfolgen.

Gemäß einem weiteren Aspekt der Erfindung ist in den Strömungskanal in Radialrichtung ein mehrteiliger Messkanaleinsatz eingesetzt, der zumindest ein Messkanaloberteil und/oder ein Messkanalunterteil aufweist, die teilweise einen Messkanalabschnitt begrenzen und denen ein Einlass- und/oder ein Auslass-Insert zugeordnet ist, das an den Messkanalabschnitt angesetzt ist. Dieser Messkanaleinsatz ist so ausgebildet, dass er durch eine radiale Ausnehmung des Strömungskanals hindurch in diesen eingesetzt werden kann.

Der vorrichtungstechnische Aufwand ist minimal, wenn beide Inserts baugleich ausgebildet sind.

Die Anpassung an unterschiedliche Nennweiten des Strömungskanals kann durch Auswechseln der Inserts erfolgen, wobei ein Messkanaloberteil und ein Messkanalunterteil zumindest bei vielen Nennweiten unverändert bleiben können. D.h. zur Anpassung wird lediglich der Strömungskanal und das oder die Inserts ausgewechselt.

Die Lagepositionierung der Einlass- und Auslass-Inserts innerhalb des Strömungskanals oder mit Bezug zum Messkanaloberteil und zum Messkanalunterteil ist besonders einfach, wenn die Inserts mit einem Axialanschlag ausgebildet sind.

Die Inserts und der Messkanalabschnitt können so ausgelegt sein, dass in einem Übergangsbereich vom Fluideinlass und/oder vom Fluidauslass zum Messkanal jeweils eine Verringerung des Durchflussquerschnitts derart ausgeführt ist, dass das Fluid in diesem Bereich beschleunigt ist.

Zur Optimierung der Strömung können im Messkanal, insbesondere im Bereich des Einlass-/Auslass-Inserts Leitrippen vorgesehen sein.

Bei einem Ausführungsbeispiel hat das Messkanaloberteil einen Gehäuseflansch, an den das Steuergehäuse angesetzt ist und der einen Boden des Steuergehäuses ausbildet.

Bei einer alternativen Lösung sind das Messkanaloberteil und das Messkanalunterteil an einen Boden des Steuergehäuses angesetzt, wobei der Boden, das Messkanaloberteil und das Messkanalunterteil gemeinsam zumindest einen Abschnitt des Messkanals umfangsseitig begrenzen.

Die Montage dieser Baugruppe ist besonders einfach, wenn Messkanaloberteil, Messkanalunterteil und das Steuergehäuse formschlüssig, insbesondere durch Passstücke/Passausnehmungen oder dergleichen zu einander lagepositioniert sind.

Die Durchströmung des Durchflussmessers ist optimal, wenn der Messkanalabschnitt einen etwa rechteckförmigen Querschnitt hat, wobei vorzugsweise eine Breite des Messkanals etwa in Richtung zum Steuergehäuse wesentlich größer als quer dazu ist.

Dabei kann die Länge des Messkanalabschnitts bei einer Nennweite von DN110 oder DN80 weniger als 40 mm betragen.

Erfindungsgemäß ist es bevorzugt, wenn am Messkanalunterteil und/oder am Messkanaloberteil jeweils zumindest ein Reflektor, vorzugsweise stoffschlüssig gehalten ist. Dieser Stoffschluss kann beispielsweise durch Umspritzen des Reflektors bei der Herstellung des Messkanalunterteils/Messkanaloberteils erfolgen.

Weiterhin ist es vorteilhaft, wenn ein Einlass-Insert und/oder ein Auslass-Insert einerseits mit einem verrundeten Querschnitt und andererseits mit einem etwa rechteckförmigen Querschnitt ausgeführt ist.

Bevorzugte Ausführungsbeispiele der Erfindung werden im Folgenden anhand schematischer Zeichnungen näher erläutert. Es zeigen:
Figur 1 eine dreidimensionale Ansicht eines ersten Ausführungsbeispiels eines erfindungsgemäßen Durchflussmessers;
Figur 2 eine Explosionszeichnung des Durchflussmessers aus Figur 1;
Figur 3 eine Detaildarstellung eines Messkanaleinsatzes des Durchflussmessers gemäß den Figuren 1 und 2;
Figur 4 Darstellungen zur Verdeutlichung der Montage von Sensoren in dem Messkanaleinsatz gemäß Figur 3;
Figur 5 eine Prinzipdarstellung der Montage des Messkanaleinsatzes gemäß den Figuren 3 und 4 in einem Strömungskanal;
Figuren 6 bis 13 Prinzipdarstellungen von möglichen Querschnitten eines Messkanals eines erfindungsgemäßen Durchflussmessers;
Figur 14 ein Ausführungsbeispiel eines Durchflussmessers, bei dem der Strömungskanal aus Kunststoff gefertigt ist;
Figur 15 eine Explosionsdarstellung eines weiteren Ausführungsbeispiels eines erfindungsgemäßen Durchflussmessers;
Figur 16 eine Variante des Ausführungsbeispiels gemäß Figur 15;
Figur 17 ein Ausführungsbeispiel eines Durchflussmessers gemäß Figur 16, wobei der Aufbau einer Steuereinheit gezeigt ist;
Figur 18 den Durchflussmesser gemäß Figur 17 mit aufgesetztem Steuergehäuse;
Figuren 19 den Durchflussmesser gemäß den Figuren 17 und 18 mit Einrichtungen zur Kennzeichnung des Durchflussmessers;
Figur 20 eine Prinzipdarstellung weiterer Ausführungsbeispiele eines erfindungsgemäßen Durchflussmessers mit unterschiedlichen Nennweiten;
Figur 21 eine Montagefolge zur Kontaktierung von Sensoren eines weiteren Ausführungsbeispiels eines Durchflussmessers;
Figur 22 ein alternatives Ausführungsbeispiel, bei dem Formkörper zur Kontaktierung der Sensoren verwendet sind;
Figur 23 eine Variante eines Durchflussmessers, bei dem die Steuereinheit über Stützzapfen an einem Gehäuseoberteil lagefixiert ist;
Figur 24 stark vereinfachte Fertigungsschritte zur Herstellung eines Durchflussmessers mit einem aus Kunststoff bestehenden Strömungskanal;
Figur 25 einen Querschnitt durch einen Durchflussmesser zur Verdeutlichung der Lagefixierung eines Steuergehäuses mit Bezug zu einem Steuerkanal;
Figur 26 eine alternative Möglichkeit zur Lagefixierung der Sensoren innerhalb eines Messkanaloberteils oder eines Steuergehäuses;
Figur 27 eine dreidimensionale Darstellung eines weiteren Ausführungsbeispiels eines Durchflussmessers;
Figur 28 eine Explosionsdarstellung des Durchflussmessers gemäß Figur 27;
Figur 29 eine Schnittdarstellung des Durchflussmessers gemäß den Figuren 27 und 28;
Figuren 30, 31 Einzeldarstellungen eines Sensorgehäuses des Durchflussmessers gemäß Figur 29;
Figuren 32, 33 Einzeldarstellungen eines Messkanaloberteils des Durchflussmessers gemäß Figur 29;
Figur 34 eine Einzeldarstellung eines Messkanalunterteils des Durchflussmessers gemäß Figur 29;
Figuren 35, 36 Einzeldarstellungen von Inserts des Durchflussmessers gemäß Figur 29;
Figur 37 eine Figur 30 entsprechende Darstellung mit montierten Sensoren;
Figuren 38, 39 Details der Kontaktierung von Sensoren bei einem erfindungsgemäßen Durchflussmesser;
Figur 40 eine Prinzipdarstellung zweier Durchflussmesser mit unterschiedlichen Nennweiten und konifiziertem Gehäuse;
Figur 41 Montagemöglichkeiten unterschiedlicher Batterien in erfindungsgemäßen Durchflussmessern;
Figur 42 die Montage displayseitiger Baugruppen bei einem erfindungsgemäßen Durchflussmesser;
Figur 43 Montageschritte zur Fixierung eines Messgehäuses an einem Strömungskanal;
Figuren 44, 45, 46 Prinzipdarstellungen zur Möglichkeit der Positionierung von Antennen eines Kommunikationsmoduls;
Figur 47 Ansichten eines weiteren Ausführungsbeispiels eines erfindungsgemäßen Durchflussmessers und
Figuren 48, 49 ein Ausführungsbeispiel eines Durchflussmessers mit einem aus Kunststoff bestehenden Strömungskanal.

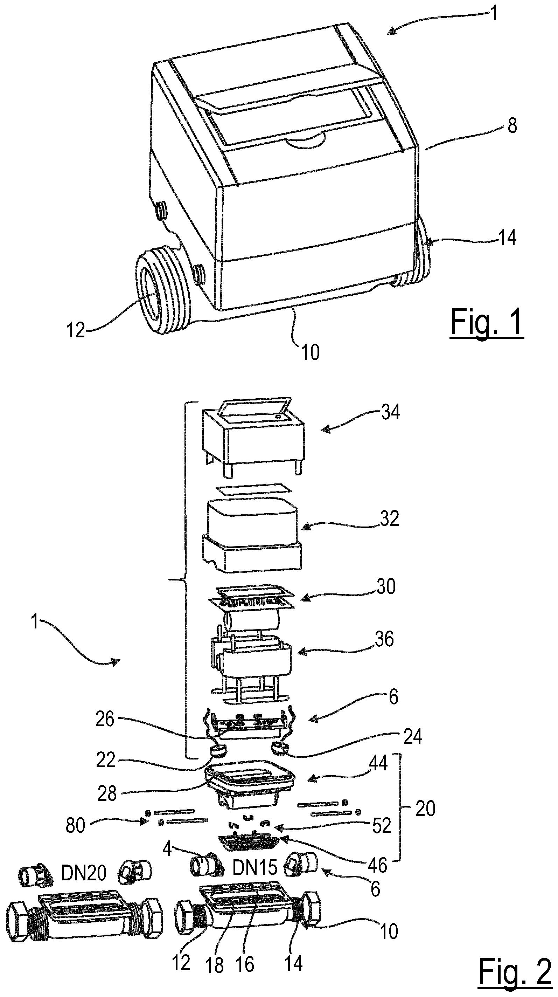

Figur 1 zeigt eine dreidimensionale Ansicht eines Ausführungsbeispiels eines erfindungsgemäßen Durchflussmessers 1 mit einem ein Messgehäuse ausbildenden Strömungskanal 10, dem daran ausgebildeten Fluid-Einlass und Fluid-Auslass sowie einem daran angesetzten Steuergehäuse 8, das eine Steuereinheit des Durchflussmessers 1 aufnimmt. Demgemäß zeichnet sich der Durchflussmesser 1 durch einen sehr kompakten Aufbau aus, wobei die Anzahl der verbauten Komponenten minimal ist.

Der erfindungsgemäße, im Folgenden noch näher erläuterte Durchflussmesser 1 zeichnet sich durch einen sehr guten gearing-Faktor (ps/l) (dieser Faktor steht für die Erhöhung des Durchflusses in Liter (l) in einer Zeitdifferenz T (ps); ein hoher gearing-Faktor bedeutet, dass man für eine Messung eine höhere Repetierbarkeit als bei einem niedrigeren Wert erhält) aus, so dass bei niedrigen Strömungsgeschwindigkeiten ein Signalrauschen (signal jitter) verringert oder zumindest kompensiert werden kann. Dies wird durch eine vorbestimmte Sensordistanz sowie eine geeignete Strömungsgeschwindigkeit im Durchflussmesser 1 bestimmt.

Dieser ist des Weiteren so ausgelegt, dass der Druckverlust beim Durchströmen minimal ist. Dies wird unter anderem dadurch erreicht, dass der im Folgenden beschriebene Messkanal mit kontinuierlichen Übergängen ausgeführt ist. Des Weiteren ist der Messkanal derart ausgebildet, dass keine Taschen, Hinterschneidungen oder sonstige Hindernisse ausgebildet sind, an denen sich Luftblasen sammeln könnten.

Der im Folgenden beschriebene Durchflussmesser 1 mit dem im Hinblick auf die Signalerfassung und Hydrodynamik optimierten Messkanal zeichnet sich durch eine optimale Signalqualität mit einer hinreichenden Signalstärke ohne Signalrauschen und ohne Interferenzen aus.

Es sind des Weiteren Standard-Ultraschall-Sensoren (Transducer) verwendbar, so dass der Herstellpreis minimal ist. Die Herstellung des Durchflussmessers 1 kann dabei nach Standardherstellungsmethoden erfolgen.

Figur 2 zeigt eine Explosionsdarstellung des Durchflussmessers 1, wobei bei den folgenden Ausführungen insbesondere auf einen Messkanaleinsatz 20 und den davon ausgebildeten Messkanal eingegangen wird. Wie dargestellt, kann der Durchflussmesser für Rohrleitungen mit Nennweiten von DN15, DN20, DN25 oder DN32 ausgeführt werden, selbstverständlich kann der Durchflussmesser auch in anderen Größen bereitgestellt werden.

Anhand der folgenden Figuren 1 bis 24 werden zunächst einige Grundkomponenten unterschiedlicher Ausführungsbeispiele eines erfindungsgemäßen Durchflussmessers 1 erläutert. Weitere Details erschließen sich dann aus der darauf folgenden genaueren Beschreibung weiterer Ausführungsbeispiele.

Wie der Explosionsdarstellung gemäß Figur 2 entnehmbar ist, hat der Durchflussmesser 1 den Strömungskanal 10 - auch Gehäuse genannt, das beim dargestellten Ausführungsbeispiel aus Messing oder einer metallischen Legierung hergestellt ist.

Dieser Strömungskanal 10 hat Anschlussstutzen 12, 14, über die der Durchflussmesser 1 an eine das Fluid führende Rohrleitung angeschlossen werden kann. Wie im Folgenden noch näher erläutert, hat der Strömungskanal 10 eine radiale Ausnehmung 16, die in einem Flansch 18 mündet, an den ein Steuergehäuse 32 angesetzt werden kann, dessen Aufbau im Folgenden noch näher erläutert wird. Durch die radiale Ausnehmung 16 hindurch kann ein Messkanaleinsatz 20 eingesetzt werden. Dieser trägt beim dargestellten Ausführungsbeispiel zwei Ultraschall-Sensoren 22, 24, die in geeigneter Weise an dem Messkanaleinsatz 20 befestigt sind. Beim dargestellten Ausführungsbeispiel erfolgt die Befestigung beispielsweise mittels einer Sensorhalterung 26. An einem Gehäuseflansch 28 des mehrteiligen Messkanaleinsatzes 20 ist die eigentliche Steuereinheit 30 zur Ansteuerung, Signalversorgung und Stromversorgung der Sensoren 22, 24 angeordnet. Diese Steuereinheit 30 ist in einem Steuergehäuse 32 aufgenommen, das über einen Gehäusedeckel 34 nach oben hin (Ansicht nach Figur 2) abgeschlossen oder überdeckt ist. Die Steuereinheit 30 wird von einer Tragstruktur 36 gehalten, an der auch Trocknungsmittel 38 abgestützt sind.

Wie den Figuren 1 und 2 entnehmbar ist, ist durch den Deckel 34 hindurch ein Display 40 ablesbar, das an der Steuereinheit 30 angeordnet ist - hierauf wird in der Folge noch näher eingegangen.

Wie in Figur 2 unten links dargestellt, kann der Strömungskanal 10 bzw. das von diesem ausgebildete Gehäuse mit unterschiedlichen Nennweiten bereitgestellt sein, wobei die eigentliche Steuereinheit 30 mit dem Steuergehäuse 32 und den Sensoren 22, 24 unabhängig von der Nennweite ausgelegt ist. Zur Anpassung ist lediglich eine Modifikation des Messkanaleinsatzes 20 erforderlich.

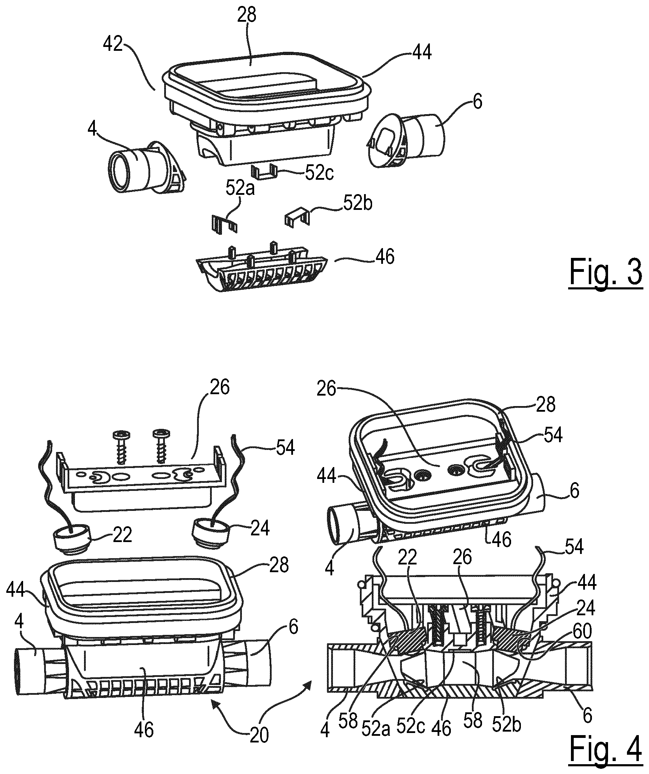

Gemäß der Detaildarstellung in Figur 3 ist der Messkanaleinsatz 20 mit einem Messkanalabschnitt 42 ausgebildet, der aus einem Messkanaloberteil 44 und einem Messkanalunterteil 46 besteht. Einlass- und auslassseitig sind ein Einlass-Insert 4 und ein Auslass-Insert 6 vorgesehen, die jeweils nach der Nennweite der Rohrleitung ausgeführt sind. Das Messkanaloberteil 44 ist des Weiteren mit dem Gehäuseflansch 28 ausgeführt, an/in den das Steuergehäuse 8 und die Sensoren 22, 24 angesetzt/eingesetzt werden.

**In** die Umfangswandung des Messkanaleinsatzes 20 sind beim dargestellten Ausführungsbeispiel drei Reflektoren 52a, 52b, 52c eingesetzt, so dass sich ein W-förmiger Signalpfad 64 ausbildet.

Die Einzelteile des Messkanaleinsatzes 20 können beispielsweise aus einem faserverstärkten Kunststoff oder einem sonstigen Kunststoffmaterial ausgeführt sein. Selbstverständlich ist auch eine Herstellung aus metallischem Werkstoff möglich.

Figur 4 zeigt den Messkanaleinsatz 20 gemäß Figur 3 im teilmontierten Zustand, wobei auch die beiden Sensoren 22, 24 dargestellt sind, die mittels der Sensorhalterung 26 im Gehäuseflansch 28 befestigt sind, wobei Signal-Leitungen 54, 56 der Sensoren 22, 24 durch die Sensorhalterung 26 hindurch hin zum nicht dargestellten Steuergehäuse 32 geführt sind.

In Figur 4 rechts unten ist ein Schnitt durch den teilmontierte Messkanaleinsatz 20 dargestellt. Man sieht, dass die Sensorhalterung 26 mit dem Messkanaloberteil 44 verschraubt und verspannt ist, wobei im Messkanaloberteil 44 Ausnehmungen/Taschen 59, 61 ausgebildet sind, in die die Sensoren 22, 24 mit ihren Koppelflächen eintauchen. Gegenüber jedem der Sensoren 22, 24 ist einer der Reflektoren 52a, 52b ausgebildet. Der dritte Reflektor 52c befindet sich zwischen den beiden Sensoren 22, 24, so dass sich, wie erläutert, ein W-förmiger Signalpfad 64 einstellt. Prinzipiell können auch Doppelsensoren verwendet werden, so dass sich zwei Signalpfade realisieren lassen. Auch ein V-förmiger Signalpfad ist vorstellbar. Auf das Profil des vom Messkanaleinsatz 20 begrenzten Messkanals wird im Folgenden noch näher eingegangen.

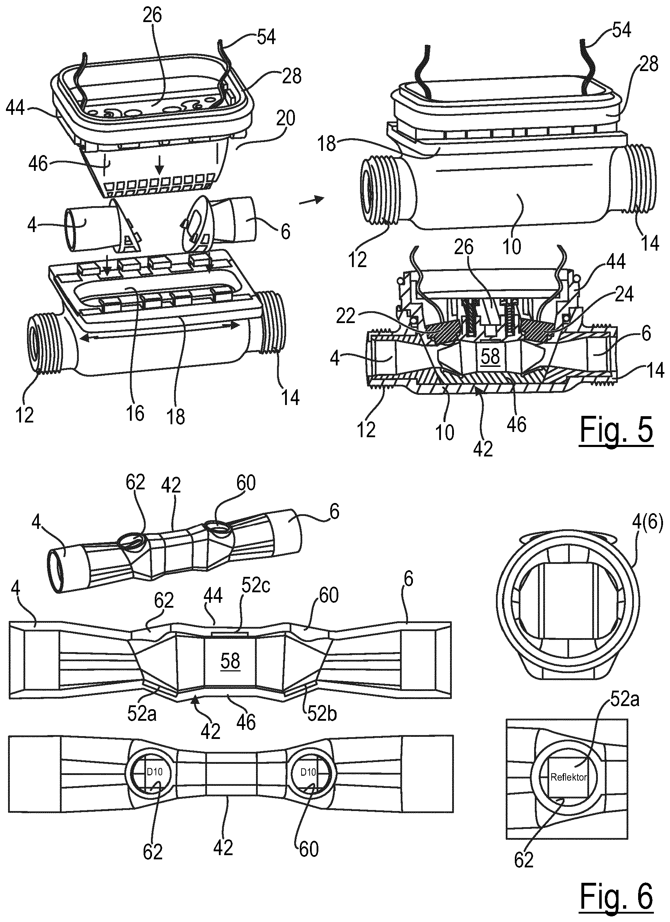

Gemäß Figur 5 wird der mehrteilige Messkanaleinsatz 20, der vorzugsweise aus Kunststoff hergestellt ist, in den ein stabiles Gehäuse ausbildenden Strömungskanal 10, eingesetzt. Dieses stabile Gehäuse kann beispielsweise aus einem Metallguss hergestellt sein. Dabei werden zunächst die beiden den Fluideinlass und den Fluidauslass ausbildenden Inserts 4, 6 in die Ausnehmung 16 des Flansches 18 eingesetzt und danach der eigentliche Messkanalabschnitt mit dem Messkanaloberteil 44 und dem Messkanalunterteil 46 in Radialrichtung eingefügt, so dass der Gehäuseflansch 28 des Messkanaleinsatzes 20 auf dem Flansch 18 des Strömungskanals 10 aufsitzt.

Die Anschlussstutzen 12, 14 des Strömungskanals 10 sind beim dargestellten Ausführungsbeispiel mit einem Gewinde oder sonstigen Anschlusselementen ausgeführt, so dass der Durchflussmesser 1 auf einfache Weise an eine Rohrleitung angesetzt werden kann.

Figur 6 zeigt Ansichten des Messkanaldesigns, das durch die vorbeschriebenen Komponenten ausgebildet ist. Dieser Messkanal 58 ist ohne Hinterschneidungen oder sonstige Verwirbelungen ausbildende Strömungshindernisse ausgeführt, wobei jedoch zur Optimierung der Strömungsführung zwischen dem Einlass und dem Auslass Querschnittsveränderungen gewählt ausgebildet sind.

In der Schnittdarstellung erkennt man, dass der Messkanal 58 im Einlass- und Auslassbereich mit einem etwa runden Querschnitt ausgebildet ist, der entsprechend der Rohrleitung gewählt sein kann. Der eigentliche Messkanalabschnitt 42 mit rechteckförmigem Querschnitt (siehe rechts oben in Figur 6) ist mittig ausgebildet. Erfindungsgemäß kann im Bereich zwischen dem Messkanalabschnitt 42 und dem Einlass bzw. dem Auslass jeweils eine Verringerung des Durchflussquerschnittes vorgesehen sein, so dass die Fluidströmung in diesem Bereich beschleunigt wird und danach der Querschnitt des Messkanals 58 wiederum gegenüber dieser Verringerung vergrößert ist. Dadurch wird die Fluidströmung im eigentlichen Messkanal 58 vergleichmäßigt und Verwirbelungen verringert, so dass ein Signalrauschen minimiert ist.

Der jeweilige Übergangsbereich, in dem der Durchflussquerschnitt verringert ist, wird beim dargestellten Ausführungsbeispiel durch eine zweiseitige und abschnittsweise ausgeführte Konifizierung (insbesondere im Vertikalschnitt gesehen) des Messkanaleinsatzes 20 ausgebildet. Diese Querschnittsverjüngung ist konkret im Übergangsbereich zwischen dem Fluideinlass-Insert 4 und dem Fluidauslass-Insert 6 zum eigentlichen Messkanalabschnitt 42 ausgebildet, der seinerseits durch das Messkanaloberteil 44 und das Messkanalunterteil 46 begrenzt ist. Durch die beiden im Messkanalabschnitt 42 ausgebildeten Ausnehmungen 60, 62, werden die Messstrahlen ein- bzw. ausgekoppelt. In die diametral gegenüberliegende Wandung des konifizierten Abschnittes ist dann jeweils ein Reflektor 52a, 52b bündig eingesetzt.

Der dritte Reflektor 52c ist zwischen den beiden Ausnehmungen 60, 62 angeordnet. In diesem Bereich ist bei dem dargestellten Ausführungsbeispiel die lichte Weite des Messkanals 58 wiederum gegenüber dem größten Durchmesser des konifizierten Abschnittes verringert, so dass die Strömung in diesem Bereich geringfügig beschleunigt ist.

In der in Figur 6 unten rechts dargestellten Detaildarstellung sieht man, dass der Reflektor 52a gegenüber der zugeordneten Ausnehmung 60, 62 angeordnet ist. **In** den Darstellungen gemäß Figur 6 ist sehr gut erkennbar, dass die jeweiligen Übergänge zwischen den konifizierten Bereichen zum Einlass-Insert 4 und zum Auslass-Insert 6 und zum Messkanalabschnitt 42 hin kontinuierlich ohne sprungartige Querschnittsveränderungen ausgeführt sind, so dass eine optimale Durchströmung gewährleistet ist.

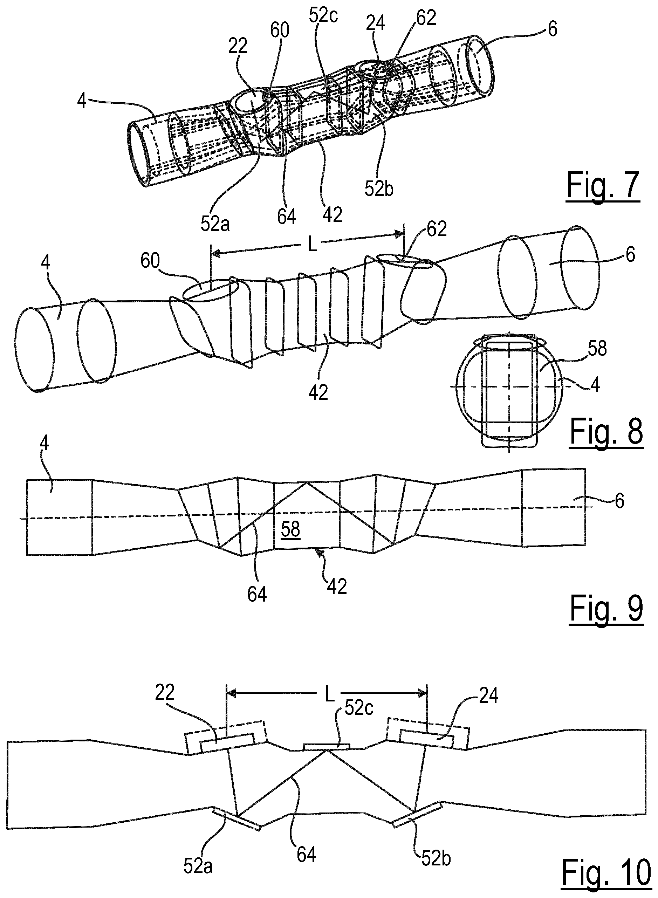

Figur 7 zeigt eine dreidimensionale Prinzipdarstellung des Kanaldesigns, aus der die Positionierung der beiden Sensoren 22, 24 und der drei Reflektoren 52a, 52b, 52c hervorgeht. Wie erläutert, wird durch die Schräganstellung der Sensoren 22, 24 und durch die vorbeschriebene Positionierung der Reflektoren 52a, 52b, 52c ein W-förmiger Signalpfad 64 eingestellt, wobei dieser so ausgebildet ist, dass die Messsignale zuverlässig von dem Sender zu dem das reflektierte Messsignal empfangenden Sensor (Empfänger) geführt sind.

Die Querschnittsprofile des Kanaldesigns sind nochmals anhand Figur 8 verdeutlicht. Demgemäß ist der Querschnitt des Kanals im Einlass- und Auslassbereich etwa kreisförmig und verjüngt sich dann zum Übergangsbereich hin, wobei in diesem Übergangsbereich der kreisförmige Querschnitt in einen länglichen, rechteckigen Querschnitt übergeht, in dem die Hochachse eine größere Erstreckung als die senkrecht zur Zeichenebene verlaufende Querachse hat. Die Ausnehmungen 60, 62 sind ebenfalls kreisförmig ausgebildet. Die Auflageflächen der Reflektoren 52a, 52b, 52c sind taschenförmig ausgeführt, so dass die Reflektoren 52a, 52b, 52c bündig in den Messkanal 58 eingesetzt werden können.

In der Darstellung gemäß Figur 8 erkennt man auch sehr gut, dass die lichte Weite im Bereich des Messkanalabschnitts 42 geringer ist, so dass sich der Querschnitt des Messkanals 58 zu den beiden Übergangsbereichen hin leicht vergrößert. Wie erläutert, verändert sich in diesen beiden Übergangsbereichen das Querschnittsprofil vom kreisförmigen Einlass-Insert 4 und Auslass-Insert 6 kontinuierlich hin zu dem etwa rechteckförmig und im Eckbereich verrundeten Messkanal 58, wobei zur Strömungsoptimierung im Übergangsbereich eine Querschnittsverringerung vorgesehen ist. Die Anmelderin behält sich vor, auf diesen kontinuierlichen Übergang einen unabhängigen Anspruch zu richten.

In Figur 9 ist nochmals der Verlauf des W-förmigen Signalpfades 64 dargestellt.

Wie in Figur 10 gezeigt, ist der Sensorabstand, d.h. der Abstand zwischen den Mittelachsen der Sensoren 22, 24 und die Geometrie des Messkanals 58 so ausgelegt, dass eine möglichst verwirbelungsfreie Durchströmung bei geringem Druckverlust und optimalem gearing-Faktor gewährleistet ist, wobei durch die Kanalgeometrie das Ansammeln von Luftblasen zuverlässig verhindert ist.

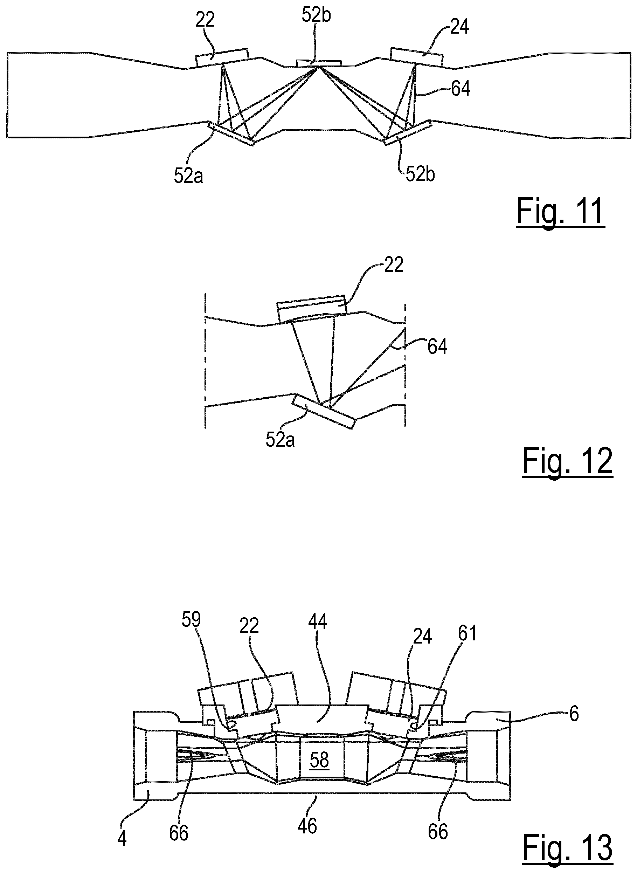

Die Fokussierung der Messstrahlen lässt sich weiter verbessern, wenn gemäß den Figuren 11 und 12 die Reflektionsflächen der Reflektoren 52a, 52b, 52c und/oder die Koppelflächen der Sensoren 22, 24 konkav verrundet sind, so dass eine optimale Fokussierung der Messstrahlen hin zu den Reflektoren 52a, 52b, 52c und dem empfängerseitigen Sensor 24 gewährleistet ist.

Figur 13 zeigt nochmals die Geometrie des vorbeschriebenen Messkanals 58 und der schräg angestellten Sensoren 22, 24 und den W-förmig angeordneten Reflektoren 52a, 52b, 52c sowie den Querschnittsveränderungen, die im Hinblick auf die Vergleichmäßigung der Fluidströmung ausgelegt sind. Bei dem in Figur 13 dargestellten Ausführungsbeispiel sind im Übergangsbereich einlass- und auslassseitig in jedem Insert 4, 6 Leitrippen 66 ausgebildet, durch die die Strömung im Übergangsbereich optimiert ist.

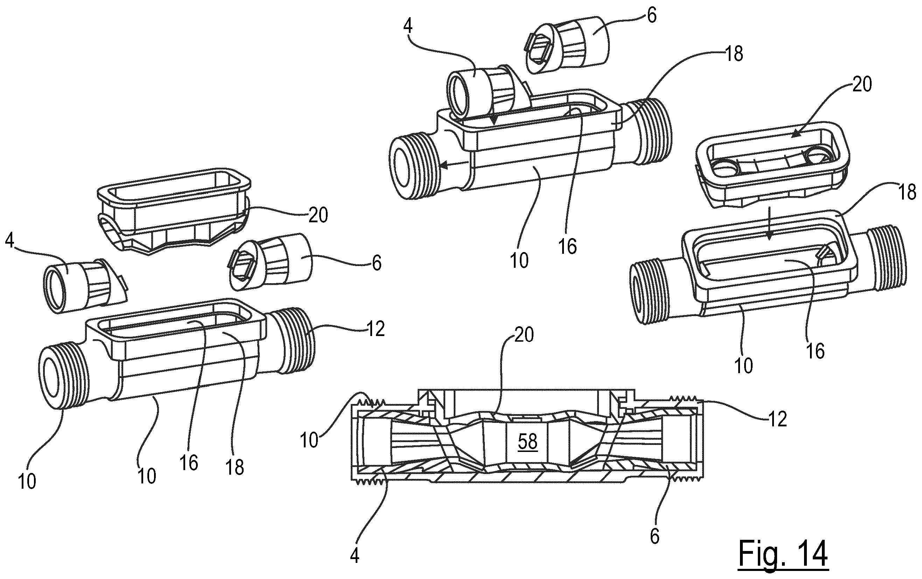

Figur 14 zeigt ein weiteres Ausführungsbeispiel eines Messkanaleinsatzes 20, wobei der den eigentlichen Messkanal 58 ausbildende Bereich einstückig ausgeführt ist. An diesen Messkanaleinsatz 20 sind dann wieder, wie bei den oben beschriebenen Ausführungsbeispielen, die Inserts 4, 6 angesetzt, die den Fluideinlass und den Fluidauslass ausbilden. Diese Inserts 4, 6 sind wiederum baugleich ausgeführt.

Die Montage erfolgt wie beim oben beschriebenen Ausführungsbeispiel. Zunächst werden das Fluideinlass-Insert 4 und das Fluidauslass-Insert 6 in den Guss-Strömungskanal 10 eingesetzt. Im nächsten Montageschritt wird dann der Messkanalabschnitt 42 in Radialrichtung abschnittsweise in den Strömungskanal 10 eingesetzt. Die Anordnung der Sensoren 22, 24 und der Reflektoren 52a, 52b, 52c und der Verlauf des Messkanals 58 entsprechen dem vorbeschriebenen Ausführungsbeispiel, so dass weitere Erläuterungen entbehrlich sind.

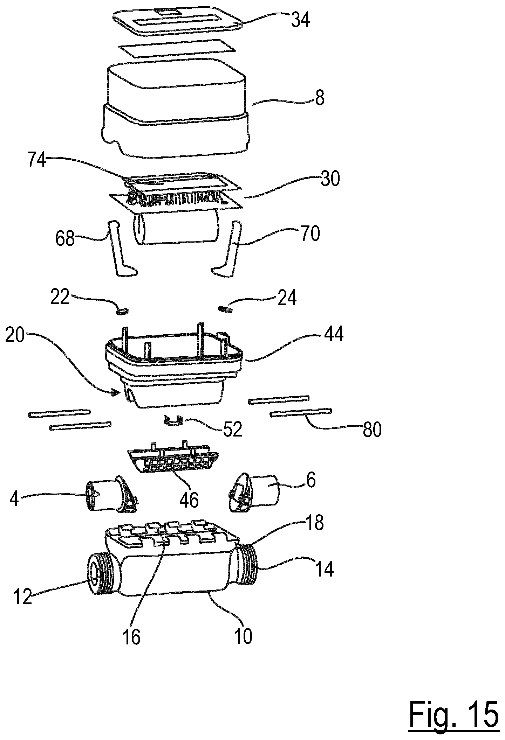

Figur 15 zeigt eine Explosionsdarstellung einer Variante eines Durchflussmessers 1, die im Hinblick auf den Aufbau in etwa demjenigen in Figur 2 entspricht, wobei allerdings die Anzahl der Bauelemente gegenüber der oben beschriebenen Lösung reduziert ist. Dies wird insbesondere dadurch erreicht, dass die Kontaktierung der Sensoren 22, 24 über Formkörper 68, 70 erfolgt, wobei die Sensoren 22, 24 mit dem Messkanaleinsatz 20, konkret mit dem Messkanaloberteil 44 verklebt sind.

Der dargestellte Durchflussmesser 1 besteht im Prinzip aus dem aus einem Gussmaterial hergestellten Strömungskanal 10, an dem der Flansch 18 mit der Ausnehmung 60 ausgebildet ist. Durch diese hindurch werden das Einlass-Insert 4, das Auslass-Insert 6, das Messkanalunterteil 46 und das Messkanaloberteil 44 eingeschoben, wobei zur Montage die beiden Inserts 4, 6 in Radialrichtung zum jeweiligen Anschluss 12, 14 hin verschoben werden. Die Verbindung des Strömungskanals 10 (Gehäuse) mit dem Messkanaleinsatz 20 erfolgt über die Verbindungsbolzen 80. In das Messkanaloberteil 44 werden die beiden Sensoren 22, 24 eingesetzt, wobei diese beispielsweise verklebt sind. Die Kontaktierung erfolgt dann über die Formkörper 68, 70, deren freie Endabschnitte, wie erläutert, mit der vorbeschriebenen Steuereinheit 30 kontaktiert sind. Auf das Messkanaloberteil 44 wird dann das Steuergehäuse 32 aufgesetzt, das seinerseits wiederum mit einem Gehäusedeckel 34 versehen sein kann, der die Sicht auf ein Display (EDU) 74 freigibt.

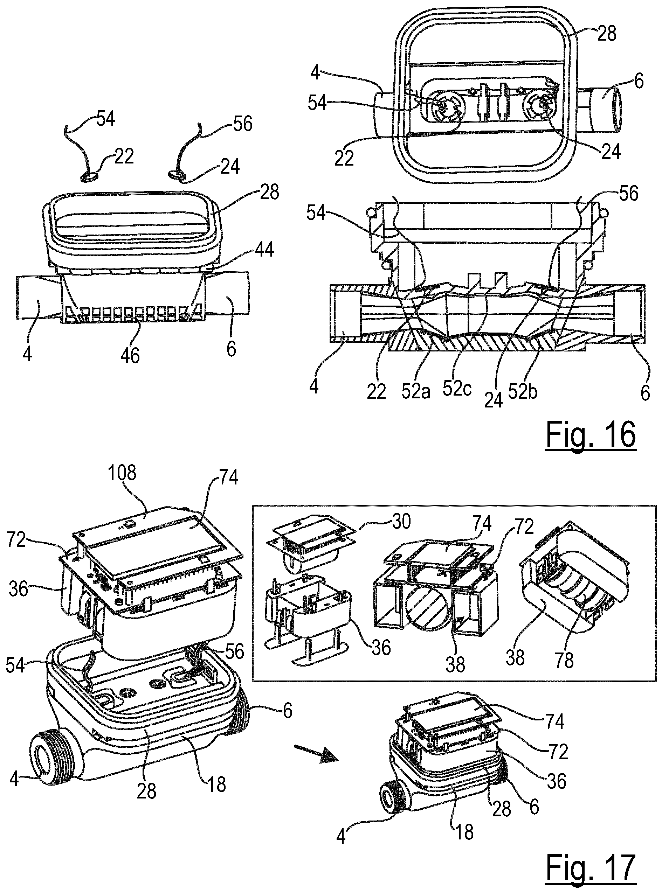

In Figur 16 sind Ansichten eines Ausführungsbeispiels gezeigt, bei dem die Sensoren (Piezoelemente) 22, 24 mit dem mehrteiligen Messkanaleinsatz 20 verklebt sind, wobei die Kontaktierung bei diesem Ausführungsbeispiel über Kabel oder (nicht dargestellte) Formkörper 68, 70 mit Leiterbahnen 90, 92 erfolgt.

Figur 17 zeigt ein Ausführungsbeispiel eines Durchflussmessers, bei dem die Steuereinheit 30 und eine EDU (Electronic-Display-Unit) 74 mit dem in Figur 4 gezeigten Gehäuseflansch 28 des Messkanaleinsatzes 20 verrastet ist.

Wie vorstehend erläutert, wird dabei die eigentliche Steuereinheit 30 mit einem Haupt-PCB 72, einer EDU 74 und ggf. einem nicht dargestellten Kommunikationsmodul (siehe folgende Ausführungen) mit der vorbeschriebenen Tragstruktur 36 verrastet, die ihrerseits auch das Trocknungsmittel 38, das beidseitig einer an der Unterseite des PCB 72 angeordneten Batterie 78 vorgesehen ist.

Die Tragstruktur 36 wird dann auf dem Gehäuseflansch 28 des Messkanaleinsatzes 20 fixiert. Dies kann ebenfalls über eine Rastverbindung oder durch eine Verschraubung oder dergleichen erfolgen.

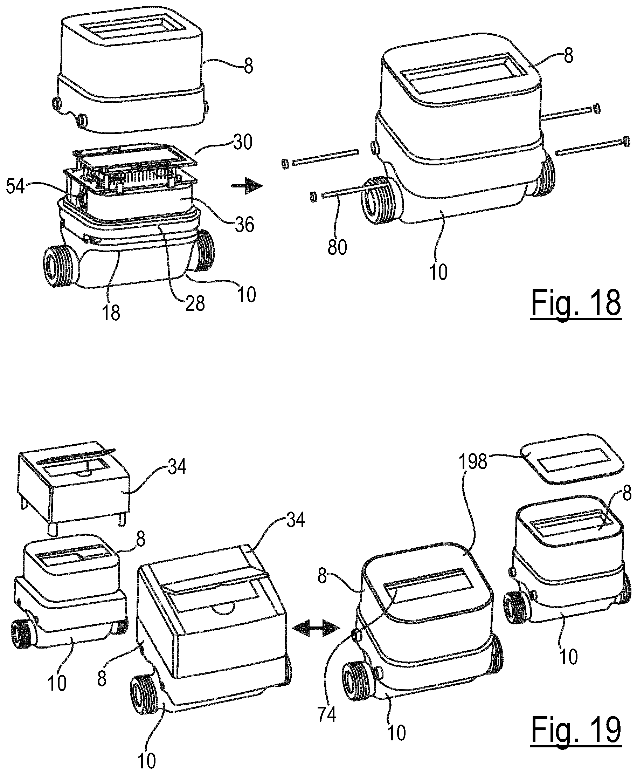

Bei der Variante gemäß Figur 18 erfolgt die Verbindung des Steuergehäuses 8 mit dem Gehäuseflansch 28 des Messkanaleinsatzes 20 und dem Flansch des Strömungskanals 10 über Verbindungsbolzen 80, die den Gehäuseflansch 28 des Messkanaleinsatzes 20 und einen entsprechenden Gehäuseabschnitt des Steuergehäuses 32 sowie den Flansch 18 durchsetzen und somit diese Komponenten kraft- und formschlüssig lagefixieren. Die obere Abdeckung des Steuergehäuses 8 erfolgt über den Gehäusedeckel 34.

Gemäß Figur 19 kann dieser Gehäusedeckel 34 als Kappe ausgeführt sein, die mit dem Steuergehäuse 32 verrastet ist und Kenndaten des Durchflussmessers 1 trägt. Bei einer alternativen, in Figur 19 dargestellten Variante ist eine Art Informationsplatte 48 in das den nach oben hin geschlossene Steuergehäuse 32 eingesetzt.

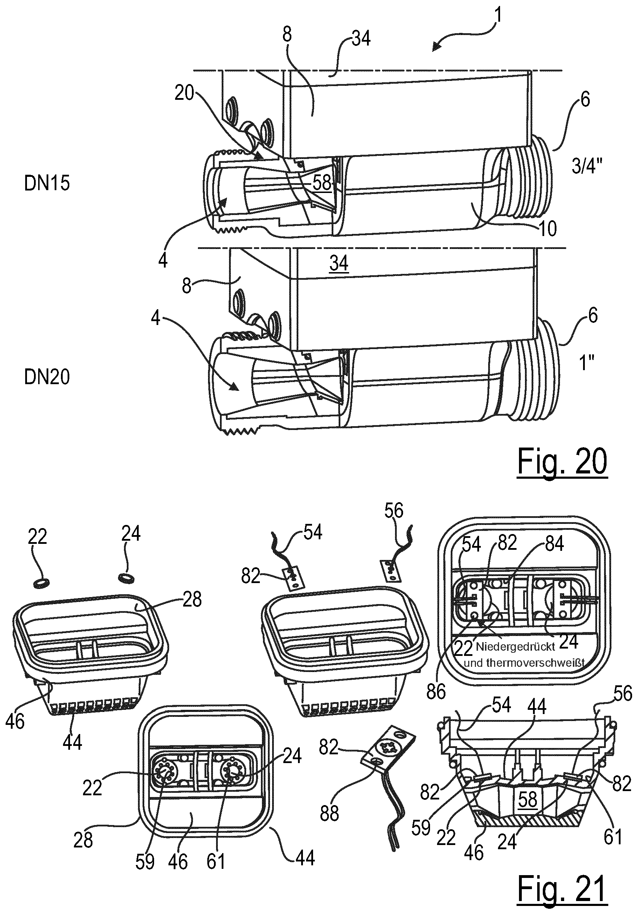

Figur 20 zeigt nochmals eine Detaildarstellung des Durchflussmessers 1 mit dem Messkanaleinsatz 20, dem Strömungskanal 10 und einem Teil des darauf befestigten Steuergehäuses 8. Die Geometrie des Messkanals 58 wurde bereits vorstehend erläutert. Aus der Darstellung gemäß Figur 20 geht hervor, dass für unterschiedliche Nennweiten im Prinzip lediglich ein Wechsel des Einlass-Inserts 4 und des Auslass-Inserts 6 sowie des Strömungskanals 10 erforderlich ist.

Beim Ausführungsbeispiel gemäß Figur 21 erfolgt die Lagefixierung und Kontaktierung der Sensoren 22, 24 über SMD-Federkontakte 82, die nach der Montage noch zusätzlich durch einen Stoffschluss, beispielsweise durch Thermoschweißen, lagefixiert sind.

Die SMD-Federkontakte 82 werden gemäß Figur 21 so montiert, dass sie mit einer Vorspannung die Sensoren 22, 24 in die Anlageposition in den Taschen 59, 61 beaufschlagen. Nach dieser Verspannung können die SMD-Federkontakte 82 dann in der vorbestimmten Position thermogeschweißt werden. Wie im Folgenden noch näher erläutert wird, können anstelle der Federkontakte 82 auch Kontaktplatinen ohne Verspannung verwendet werden.

Figur 21 zeigt eine mögliche Montagefolge. Wie angedeutet, werden im ersten Verfahrensschritt die Sensoren 22, 24 in das Messkanaloberteil 44 eingelegt. Die Federkontakte 82 sind mit den Leitungen 54, 56 verbunden und werden, wie in Figur 21 rechts dargestellt, auf die Sensoren 22, 24 aufgesetzt und dabei unterhalb einer Hinterschneidung verspannt, wobei die Lage der Federkontakte 82 durch Referenzzapfen 86 vorgegeben ist, die in entsprechende Referenzausnehmungen 88 der Federkontakte 82 eintauchen.

In einem folgenden Verfahrensschritt erfolgt dann eine stoffschlüssige Verbindung durch Thermoschweißen. Prinzipiell kann natürlich auch auf die Federvorspannung verzichtet werden - wie erläutert, wird darauf in der Folge eingegangen.

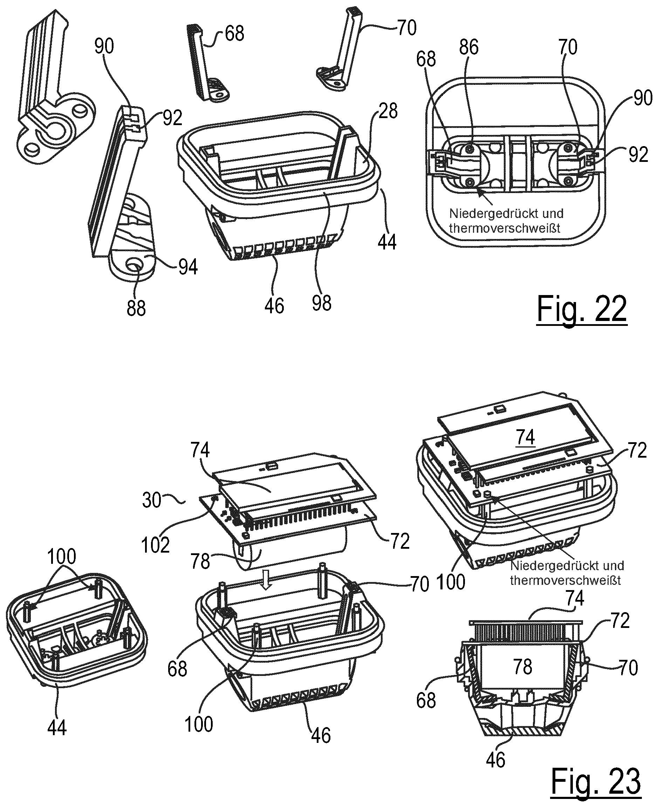

Bei der Variante gemäß Figur 22 werden die eingangs genannten Formkörper 68, 70 zur Kontaktierung verwendet, die in den Messkanaleinsatz 20, insbesondere den die Steuereinheit 30 aufnehmenden Gehäuseflansch 28 eingesetzt sind. Dabei kann die Lagefixierung ebenfalls wieder durch eine Verspannung der Formkörper 68, 70 und/oder stoffschlüssig erfolgen. Wie in Figur 22 dargestellt, sind die Formkörper 68, 70 mit entsprechenden Leiterbahnen 90, 92 ausgeführt, die die entsprechenden Signal- und Energiepfade (64) ausbilden. Die Formkörper 68, 70 sind dabei etwa L-förmig mit einer flachen Basis 94 ausgeführt, deren Geometrie in etwa derjenigen der Federkontakte 82 entspricht. Die Leiterbahnen 90, 92 sind dabei so ausgeführt, dass sie eine Kontaktierung der Sensoren 22, 24 entlang der zum Betrachter in Figur 22 hin weisenden Großfläche der Sensoren 22, 24 ermöglicht. An dieser Basis 94 sind wiederum Referenzausnehmungen 88 ausgebildet, die von gehäuseseitigen Referenzzapfen 86 durchsetzt sind. Von der Basis 94 kragt jeweils ein Kontaktarm 96 nach oben hin, in Richtung zum Haupt-PCB 72 aus, wobei dann die freien Endabschnitte der Kontaktarme 96 in Anlage an entsprechende Kontakte der Haupt-PCB 72 gelangen, um diese zu kontaktieren. Die Formkörper 68, 70 sind dabei federnd ausgeführt, so dass eine kontaktoptimierte Anlage an dem Haupt-PCB 72 gewährleistet ist. Prinzipiell kann dieser Bereich auch verlötet oder in sonstiger Weise stoffschlüssig verbunden sein.

Wie erläutert, können anstelle der Formkörper 68, 70 auch Kabel oder dergleichen verwendet werden.

In Figur 22 sieht man auch recht deutlich, dass zwischen dem Gehäuseflansch 28 des Messkanaloberteils 44 und dem nicht dargestellten Steuergehäuse 32 an dem Gehäuseflansch 28 eine Gehäusedichtung 98 angeordnet ist, über die das Steuergehäuse 8 abgedichtet ist.

Beim Ausführungsbeispiel gemäß Figur 23 ist auch die Steuereinheit 30 stoffschlüssig mit dem Messkanaleinsatz 20, konkret dem Messkanaloberteil 44, verbunden. Bei diesem Ausführungsbeispiel sind die Sensoren 22, 24 in der vorbeschriebenen Weise mit dem Messkanaleinsatz 20 verklebt, wobei die Kontaktierung über Formkörper 68, 70 erfolgt. Ähnlich wie bei dem oben beschriebenen Ausführungsbeispiel sind bei diesem Ausführungsbeispiel am Messkanaloberteil 44 Stützzapfen 100 ausgebildet, die in entsprechende Zapfenausschnitte 102 des Haupt-PCB 72 eintauchen, wobei die Lagefixierung dann nach dem Aufsetzen durch Thermoschweißen erfolgt. In der Ansicht nach Figur 23 sieht man auch die im Folgenden noch näher erläuterte Struktur der Steuereinheit 30 mit dem Haupt-PCB 72, der darunter (Ansicht nach Figur 23) angeordneten Batterie 78 und der auf der Platine angeordneten EDU 74 sowie ggf. einer Kommunikationseinheit. Hierauf wird in der Folge noch näher eingegangen.

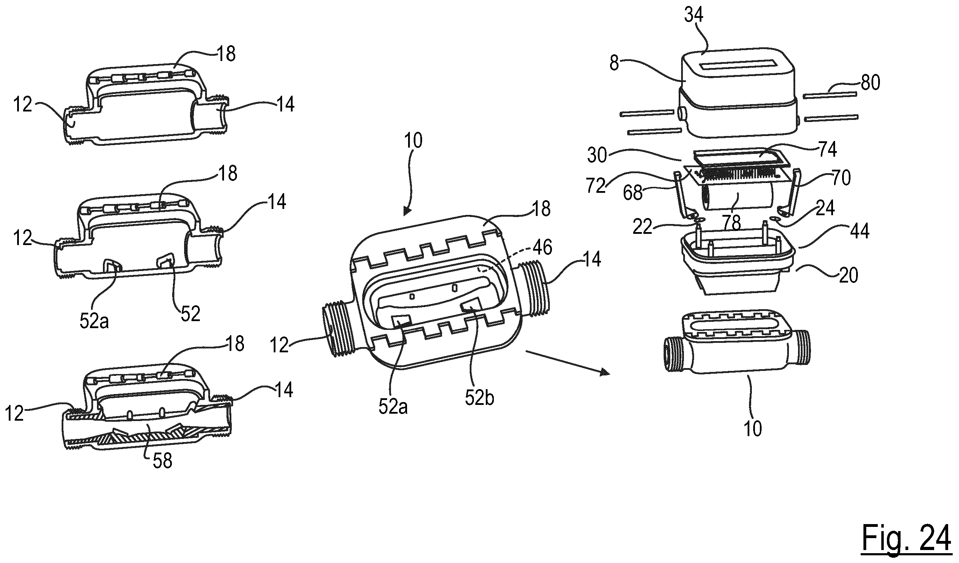

In Figur 24 ist ein weiter vereinfachtes Ausführungsbeispiel dargestellt, bei dem ein Teil des Messkanaleinsatzes 20 und der dieses zumindest teilweise aufnehmende Strömungskanal 10 einstückig ausgebildet sind.

Wie in Figur 24 links dargestellt, wird in einem ersten Fertigungsschritt durch Spritzgießen mit einem faserverstärkten Thermoplast zunächst eine Art Außenhülle (Außengehäuse) gefertigt, an der bereits Anschlussstutzen 12, 14, die Basis des Flanschs 18 zur Aufnahme der Steuereinheit 30 und auch ein Raum zur teilweisen Aufnahme des Messkanaleinsatzes 20 ausgebildet sind.

In einem zweiten Schritt werden dann die Reflektoren 52 in diesen Rohling eingesetzt und ggf. weitere Komponenten positioniert, die dann in einem dritten Verfahrensschritt mit einem Standardkunststoff, der nicht notwendigerweise faserverstärkt ausgeführt sein muss, umspritzt werden, wobei dieses Umspritzen die Kontur/Profilierung des vorbeschriebenen Messkanals 58 (siehe Figuren 7 bis 15) ausgebildet. Dieser Kunststoff wird zur Vereinfachung der Herstellung mit einem vergleichsweise geringen Schmelzpunkt ausgeführt, so dass der außenliegende faserverstärkte Kunststoff nicht an- oder aufgeschmolzen wird.

Dieses durch Spritzgießen hergestellte Gehäuse entspricht im Großen und Ganzen dem vorbeschriebenen Strömungskanal 10, wobei dann in diesen der Messkanaleinsatz 20 mit dem Messkanaloberteil 44 eingesetzt wird. Das Messkanalunterteil 46 ist sozusagen in das Gehäuse (Strömungskanal 10) integriert.

Als Ergebnis erhält man dann eine in einem zweistufigen Formgebungsvorgang hergestellte Anordnung, die im Prinzip aus dem Strömungskanal 10 und dem Messkanalunterteil 46 besteht. Die Befestigung der Steuereinheit 30 bzw. des Steuergehäuses 8, der Sensoren 22, 24 und der Formkörper 68, 70 und der Inserts 4, 6 erfolgt dann in der vorbeschriebenen Weise.

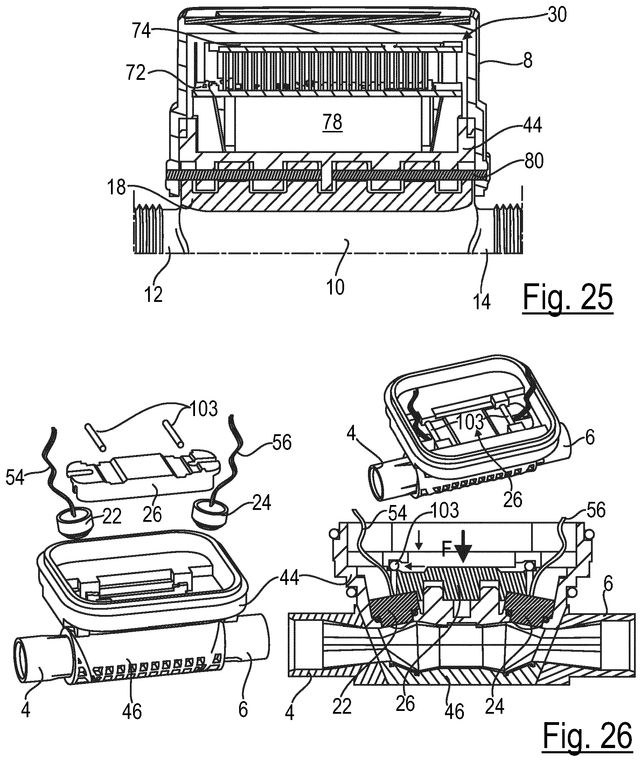

Figur 25 zeigt nochmals eine Detaildarstellung, aus der die Verbindung des Strömungskanals 10 (Gehäuse) mit dem Messkanaloberteil 44 und dem Steuergehäuse 8 über die Verbindungsbolzen 80 hervorgeht. Wie erläutert, umgibt das Steuergehäuse 8 die eigentliche Steuereinheit 30 mit der Batterie 78, dem Haupt-PCB 72 und der EDU 74. Die Sensoren sind in dieser Schnittdarstellung nicht sichtbar. Dementsprechend erfolgt die Verbindung durch die vorbeschriebenen Verbindungsbolzen 80, die wechselseitig ausgebildete Vorsprünge der Komponenten (Steuergehäuse 8, Messkanaleinsatz 20, Messkanaloberteil 44 und Strömungskanal 10) durchsetzen und nach außen hin abgedichtet sind.

In Figur 26 ist eine Variante des eingangs in Figur 4 dargestellten Ausführungsbeispiels gezeigt. Bei der Variante gemäß Figur 26 wird die Sensorhalterung 26 nicht verschraubt, sondern über Passbolzen 103 in dem Flansch des Messkanaloberteils 44 lagefixiert. Im Übrigen entspricht das Ausführungsbeispiel demjenigen aus Figur 4, so dass weitere Erläuterungen entbehrlich sind.

Wie in der Darstellung gemäß Figur 8 angedeutet, ist die Länge L des Messkanals, d.h. im Prinzip der Abstand der beiden Ausnehmungen 60, 62 oder der Sensoren 22, 24 gegenüber herkömmlichen Lösungen relativ gering. Erfindungsgemäß kann beispielsweise bei Nennweiten DN von 110 oder 80 die Länge des Messkanals L (Abstand der Sensoren 22, 24 oder der Ausnehmungen 60, 62) weniger als 40 mm betragen, wobei das eingangs genannte Gearing gegenüber herkömmlichen Lösungen optimiert ist.

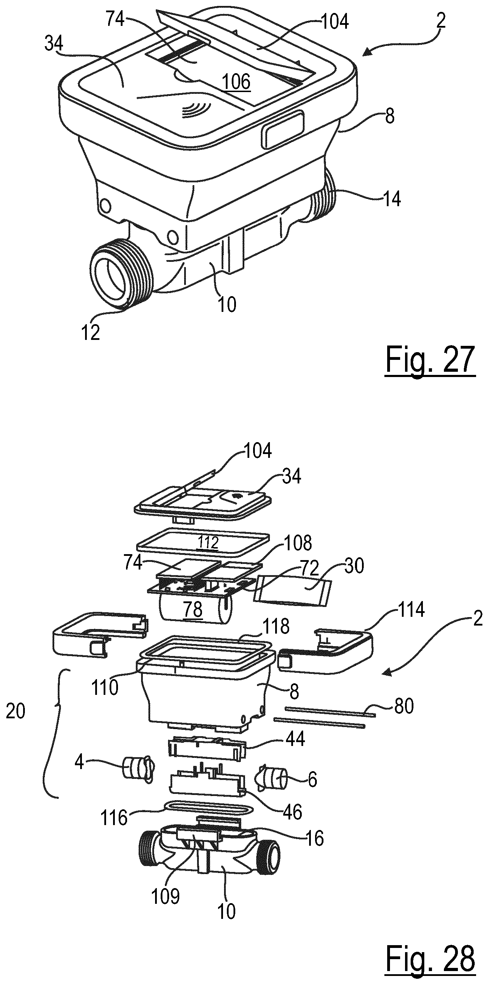

Figur 27 zeigt ein weiteres Ausführungsbeispiel eines erfindungsgemäßen Durchflussmessers 1, der den zuvor beschriebenen Ausführungsbeispielen relativ nahe kommt. Auch bei diesem Durchflussmesser 1 ist ein Guss-Strömungskanal 10 mit zwei Anschlussstutzen 12, 14 vorgesehen, an den ein Messgehäuse 2 angesetzt ist. Das Messgehäuse 2 hat ein Steuergehäuse 8, das zum Strömungskanal 10 (Gehäuse) hin konifiziert ist - hierauf wird in der Folge noch näher eingegangen. Auf das Steuergehäuse 8 ist ein Gehäusedeckel 34 oder eine "Cap" aufgesetzt, die mit einer Abdeckung 104 ausgeführt ist, die im geöffneten Zustand (Ansicht nach Figur 27) die Sicht auf ein Display (EDU 74) freigibt, von dem in der Darstellung gemäß Figur 7 lediglich ein Displayfenster 106 zu sehen ist.

Weitere Bauelemente dieses Durchflussmessers 1 erschließen sich aus der Figur 28, die wiederum eine Explosionsdarstellung des Durchflussmessers 1 zeigt. Der Strömungskanal 10 hat wiederum einen tangential angeordneten Flansch 18 mit der Ausnehmung 16. Seitlich am Flansch 18 sind Führungen 109 für eine im Folgenden noch näher erläuterte Verriegelung dargestellt.

Das Messgehäuse 2 ist mit einem mehrteiligen Messkanaleinsatz 20 ausgeführt, der im Prinzip - ähnlich wie bei den eingangs beschriebenen Ausführungsbeispielen - aus einem Messkanalunterteil 46, einem Messkanaloberteil 44, zwei Inserts 4, 6 und einem Steuergehäuse 8 besteht, die gemeinsam die Umfangswandung des Messkanals 58 ausbilden. Wie im Folgenden noch näher beschrieben wird, begrenzt dabei ein Boden des Steuergehäuses 8 gemeinsam mit dem Messkanaloberteil 44 und dem Messkanalunterteil 46 den Messkanal 58.

In dem nach unten hin geschlossenen Steuergehäuse 8 ist die eigentliche Steuereinheit 30 mit der Batterie 78, dem Haupt-PCB 72, der EDU 74 und einem Kommunikationsmodul 108 eingesetzt. Beim dargestellten Ausführungsbeispiel hat das Steuergehäuse 8 einen Deckelflansch 110, auf dem ein Abdeckglas 112 abgestützt ist, das mittels eines zweiteiligen Verschieberahmens 114 verriegelt ist. Dieser umgreift in der Schließposition sowohl den Deckelflansch 110 als auch den Umfang des Abdeckglases 112, wobei die beiden Verschieberahmenhälften mit einander verrastbar sind, so dass das Abdeckglas 112 mit Vorspannung über eine Dichtung 116 gegen die Stirnfläche des Deckelflansches 110 gepresst wird. Über diesen Verschieberahmen 114 kann zusätzlich auch der Gehäusedeckel 34 mit der Abdeckung 104 lagefixiert werden. Wie eingangs erläutert, kann der Gehäusedeckel 34 mit Informationen über den Durchflussmesser 1 versehen sein und wirkt somit als eine Art ID-Plate. Die Abdichtung des Messkanaleinsatzes 20 gegenüber dem Strömungskanal 10 erfolgt ebenfalls über eine Dichtung 118.

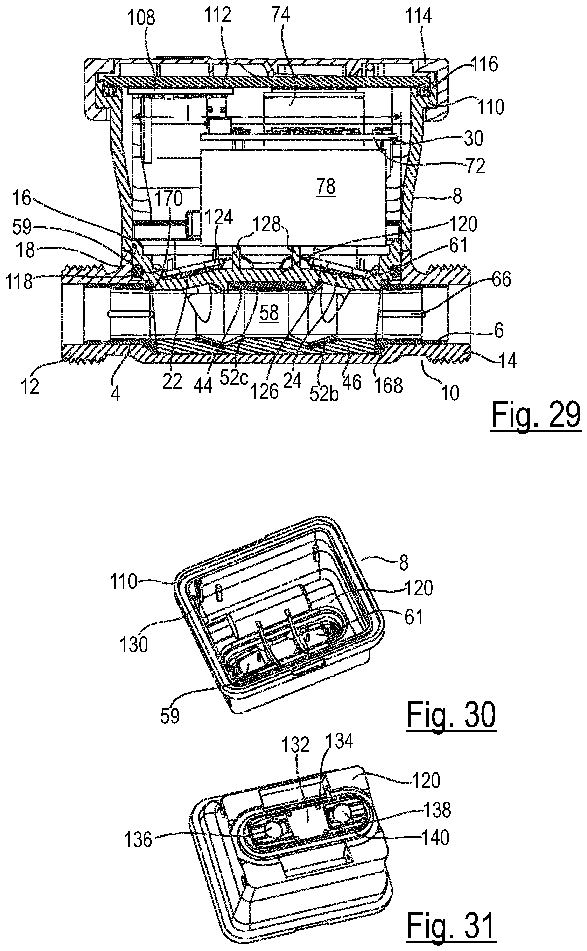

In der Figur 29 ist ein Längsschnitt durch den montierten Durchflussmesser 1 gemäß den Figuren 27 und 28 dargestellt. Man erkennt in dieser Darstellung das die Steuereinheit 30 aufnehmende Steuergehäuse 8. Zu sehen ist dabei die Batterie 78, die an der Unterseite der Haupt-PCB 72 angeordnet ist und somit die elektrischen Verbraucher mit Energie versorgt. Parallel zum Haupt-PCB 72 sind das Kommunikationsmodul 108 und die EDU 74 angeordnet, wobei diese von dem Abdeckglas 112 überdeckt sind. Sowohl die EDU 74 als auch das Kommunikationsmodul 108 sind mit dem Haupt-PCB 72 (auch als "meterology-board" bezeichnet) kontaktiert, so dass die Steuerung dieser Elemente über das PCB 72 erfolgt.

Wie vorstehend erläutert, liegt das Abdeckglas 112 über eine Dichtung 116 auf dem Deckelflansch 110 des Steuergehäuses 8 auf und wird über den verrasteten Verschieberahmen 114 in seiner Sollposition gehalten, so dass das Steuergehäuse 8 nach oben hin zuverlässig abgedeckt ist. Wie vorstehend erwähnt, ist bei diesem Ausführungsbeispiel das Steuergehäuse 8 mit einem geschlossenen Boden 120 ausgeführt, an dem die zwei Taschen 59, 61 ausgebildet sind, in die die Ultraschall-Sensoren 22 24 eingesetzt sind. Beim dargestellten Ausführungsbeispiel sind diese mit dem Boden 120 verklebt. Die Kontaktierung erfolgt - wie später noch näher erläutert wird - jeweils über Kontaktplatinen 124, 126, die über Kabel/Leitungen 54 oder über die vorbeschriebenen Formkörper 68, 70 mit den Leiterbahnen 90, 92 mit dem Haupt-PCB 72 verbunden sind.

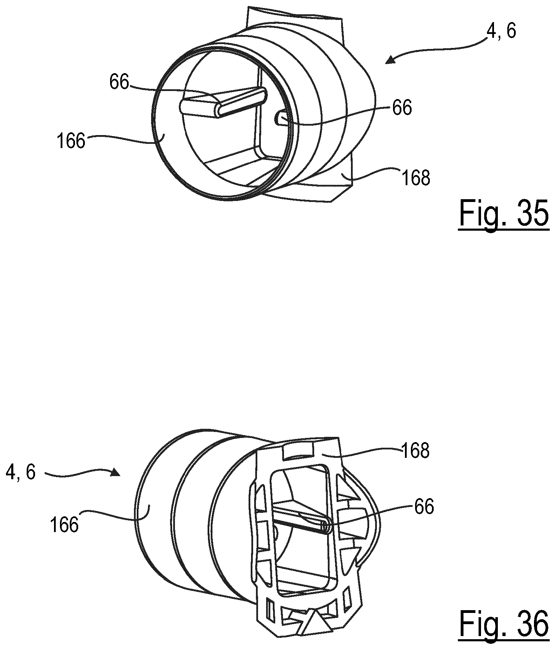

Die Messsignale der Sensoren 22, 24 werden direkt durch den Boden 120 des Steuergehäuses 8 hindurch in den Messkanal 58 ein- bzw. ausgekoppelt. Der bodenseitige Endabschnitt des Steuergehäuses 8 ist in die Ausnehmung 60 des Flansches 18 des Strömungskanals 10 eingesetzt, wobei die Abdichtung über eine weitere Dichtung 118 erfolgt, die zwischen dem Gehäuseboden bzw. der daran angrenzenden Umfangswandung des Steuergehäuses 8 und dem Flansch 18 angeordnet ist. Das Steuergehäuse 8, insbesondere der Boden 120, ist mit dem nur abschnittsweise sichtbaren Messkanaloberteil 44 und dem im Schnitt dargestellten Messkanalunterteil 46 verbunden. Der Aufbau dieser Komponenten wird später anhand der Figuren 30 bis 36 erläutert. Wie in der Darstellung gemäß Figur 29 gut erkennbar, sind in Ausnehmungen des Messkanalunterteils 46 die beiden Reflektoren 52a, 52b aufgenommen, während der dritte Reflektor 52c in das Messkanaloberteil 44 eingebettet ist. Dementsprechend ergibt sich ein W-förmiger Signalpfad 64. Seitlich vom Messkanaloberteil 44 bzw. vom Messkanalunterteil 46 sind das Einlass-Insert 4 und das Auslass-Insert 6 angeordnet, die beide abschnittsweise in den Anschlussstutzen 12 bzw. 14 eintauchen.

Die gesamte Länge L des Messkanaleinsatzes 20 mit den beiden Inserts 4, 6 und dem Messkanaloberteil 44 und dem Messkanalunterteil 46 ist größer als die lichte Weite I der Ausnehmung 16. Das radiale Einsetzen ist nur aufgrund der Mehrteiligkeit des Messkanaleinsatzes 20 möglich. Der wesentliche Vorteil besteht darin, dass im Hinblick auf die Profilierung keine Kompromisse wie bei dem Stand der Technik gemacht werden müssen, der stirnseitig von dem Einlass oder dem Auslass her eingeschoben werden muss. Wie in der Darstellung gemäß Figur 29 entnehmbar ist, sind am Boden 120 noch Stützen 128 vorgesehen, auf denen die Batterie 78 aufliegt. Bei diesem Ausführungsbeispiel sind im Bereich der beiden Inserts 4, 6 auch die beschriebenen Leitrippen 66 zur Strömungsoptimierung vorgesehen. Die Reflektoren 52a, 52b, 52c können beispielsweise durch Spritzgießen stoffschlüssig mit dem Messkanaloberteil 44 bzw. dem Messkanalunterteil 46 verbunden sein.

Einzelheiten der Bauelemente des Messkanaleinsatzes 20 werden anhand der Figuren 30 bis 36 erläutert. Figur 30 zeigt dabei eine Draufsicht auf das Steuergehäuse 8, das nach unten hin (weg vom Betrachter in Figur 30) durch den Boden 120 verschlossen ist. Figur 31 zeigt das Steuergehäuse 8 mit Blick auf diesen Boden 120. In der Darstellung gemäß Figur 30 oben liegend ist der Deckelflansch 110 mit einem Aufnahmeraum 130 für die Dichtung 116 zu sehen. Wie erläutert, sind im Boden 120 die beiden Taschen 59, 61 ausgebildet, wobei deren Bodenflächen poliert sind, um einerseits eine optimale Ein- und Auskopplung der Messsignale zu gewährleisten und andererseits eine optimale Anbindung der auf diesen Bodenflächen aufliegenden Sensoren 22, 24 zu gewährleisten. An der in Figur 31 sichtbaren Großfläche des Bodens 120 ist ein Messkanaladapter 132 vorgesehen, der eine formschlüssige Verbindung mit dem Messkanaloberteil 44 und dem Messkanalunterteil 46 ermöglicht. Dazu ist der Messkanaladapter 132 im mittleren Bereich mit vier Passausnehmungen 134 ausgeführt, in die entsprechende Passelemente des Messkanalunterteils 46 eintauchen. Seitlich von diesen Passausnehmungen 134 sind Einkoppel- bzw. Auskoppelflächen 136, 138 ausgebildet, die ebenfalls poliert sein können, um die Signalqualität zu optimieren. Im Umfangsbereich des Messkanaladapters 132 sind Stufen 140 zur Positionierung des Messkanaloberteils 44 und des Messkanalunterteils 46 vorgesehen, so dass die Bauelemente des Messkanaleinsatzes 20 passgenau montierbar sind.

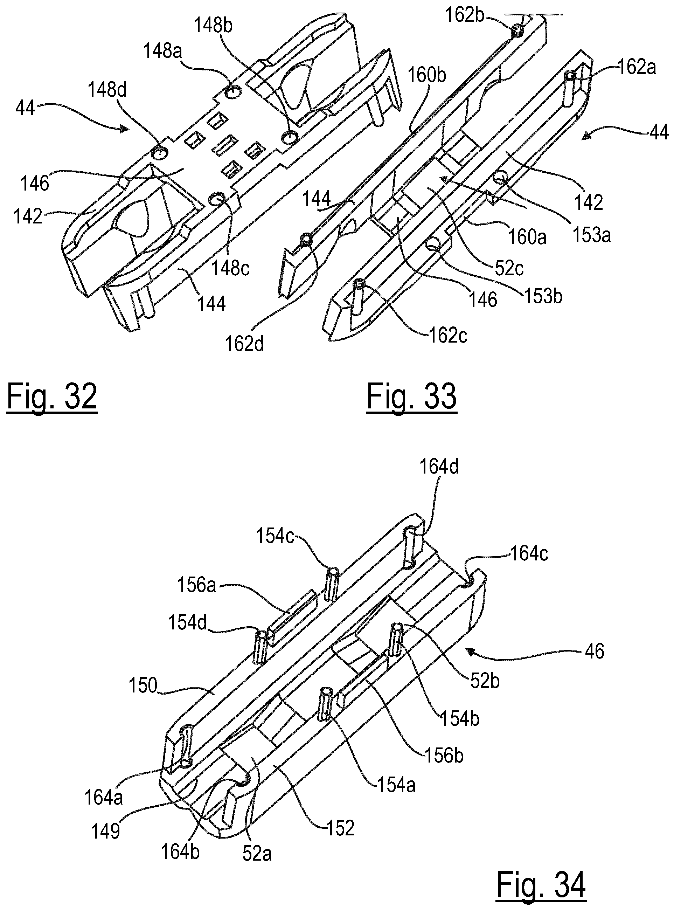

Figur 32 und Figur 33 zeigen Ansichten des Messkanaloberteils 44, das an den Messkanaladapter 132 angesetzt ist. Demgemäß hat das Messkanaloberteil 44 zwei Seitenwandungen 142, 144, die über eine Konsole 146 mit einander verbunden sind. An dieser Konsole 146 ist zwischen den beiden Seitenwandungen 142, 144 der Reflektor 52c angeordnet, wobei dieser vorzugsweise durch Spritzgießen eingebunden ist. Im Bereich der etwa mit einem L-förmigen Profil ausgebildeten Seitenwandungen 142, 144 sind jeweils Durchbrüche 153a, 153b, 153c, 153d ausgebildet, deren Beabstandung derjenigen der Passausnehmungen 134 entspricht. Entlang der Konsole 146 und der Seitenwandungen 142, 144 sind noch weitere Passelemente vorgesehen, die entsprechend des Messkanaladapters 132 oder der sonstigen Kontur des Bodens 120 des Steuergehäuses 8 ausgebildet sind, so dass eine passgenaue Montage des Messkanaloberteils 44 ermöglicht ist.

Figur 34 zeigt eine Draufsicht auf das Messkanalunterteil 46, in dessen Bodenfläche 149 die beiden Reflektoren 52a, 52b eingebettet sind. Die Bodenfläche 149 verbindet zwei Wandungen 150, 152, die in der Montageposition (siehe Figur 29) die beiden Seitenwandungen 142, 144 des Messkanaloberteils 44 umgreifen. An den zum Betrachter hin weisenden Längskanten der Wandungen 150, 152 sind vier Passstifte 154a, 154b, 154c, 154d sowie weitere Passvorsprünge 156a, 156b vorgesehen, die im montierten Zustand die an den Seitenwandungen 142, 144 des Messkanaloberteils 44 ausgebildeten Durchbrüche 153a, 153b, 153c und 153d (letzteren nicht sichtbar) durchsetzen und dann in die Passausnehmungen 134a, 134b, 134c, 134d eintauchen. Die Passvorsprünge 156a, 156b tauchen dabei in seitliche Ausnehmungen 160a, 160b der Seitenwandungen 142, 144 ein. Eine weitere Relativpositionierung des Messkanaloberteils 44 mit Bezug zum Messkanalunterteil 46 erfolgt über Passstifte 162a, 162b, 162c, 162d des Messkanaloberteils 44, die in entsprechende Nuten 164a, 164b, 164c, 164d des Messkanalunterteils 46 eingreifen.

Den einlass- und auslassseitigen Abschluss des Messkanaleinsatzes 20 bilden die beiden Inserts 4, 6, die baugleich ausgeführt sind. Diese Inserts 4, 6 haben - wie auch aus der Schnittdarstellung in Figur 29 hervorgeht - ein konifiziertes Rohrstück 166, dessen Durchmesser zum eigentlichen Messkanal 58 hin etwas geringer wird, wobei an den Umfangswandungen zumindest zwei der Leitrippen 66 vorgesehen sind. An dem zum Messkanaloberteil 44/Messkanalunterteil 46 zugewandten Endabschnitt ist ein Profilkörper 168 vorgesehen, über den der runde Querschnitt des Rohrstücks 166 auf den rechteckförmigen Querschnitt des Messkanals 58 reduziert wird. Dieser Profilkörper 168 steht auch in Radialrichtung über den Außenumfang des Rohrstücks 166 hinaus und wirkt somit als Axialanschlag beim Einschieben der Inserts 4, 6 in den Bereich der Anschlussstutzen 12, 14. Wie aus der Schnittdarstellung in Figur 29 entnehmbar ist, liegen die Stirnflächen dieser Profilkörper 168 auch im montierten Zustand an Stufen 170 des Bodens 120 an, so dass der Messkanaleinsatz 20 zuverlässig lagepositioniert ist.

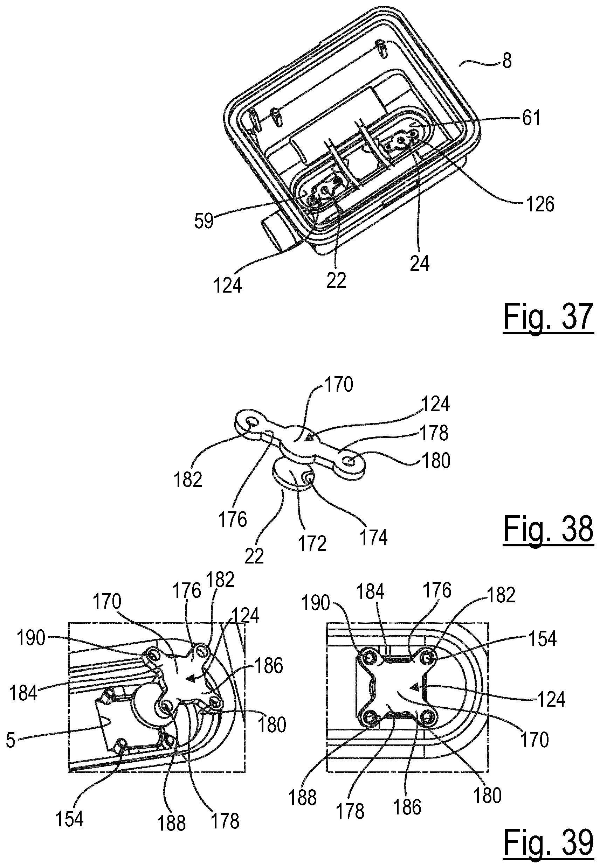

Figur 37 zeigt das offene Steuergehäuse 8 mit einem Blick auf den Boden 120 mit den beiden Taschen 59, 61, in die die beiden Sensoren 22, 24 eingesetzt sind. Die Kontaktierung erfolgt - wie oben erläutert - über die beiden Kontaktplatinen 124, 126 und nicht dargestellte Leitungen 54 (Kabel) bzw. die Formkörper 68, 70. Der Aufbau dieser Kontaktplatinen 124, 126 wird anhand der Figuren 38 und 39 erläutert.

Figur 38 zeigt eine Kontaktplatine 124 wie sie bei dem Ausführungsbeispiel gemäß Figur 37 verwendet ist. Diese Kontaktplatine 124 hat ein mittleres Kontaktstück 170, an dem Leiterbahnen zur Kontaktierung des Sensors 22 ausgebildet sind. Dieser Sensor 22 ist so ausgeführt, dass beide Elektroden 172, 174 auf der in Figur 38 sichtbaren Großfläche zugänglich sind, so dass die Kontaktierung über eine entsprechende Ausgestaltung des Kontaktstücks 170 erfolgen kann. Dieses Konzept mit auf einer Seite des Sensors 22 ausgebildeten Elektroden 172, 174 ermöglicht es, dass letztere einfach durch Kleben mit dem Boden 120 des Steuergehäuses 8 oder eines Messkanaleinsatzes 20 verbunden werden kann, so dass die Kontaktierung dann von oben, d.h. von der von der Verklebung abgewandten Seite her, erfolgt.

Beim dargestellten Ausführungsbeispiel ist das Kontaktstück 170 mit den daran ausgebildeten Leiterbahnen durch Löten oder Verkleben mit den Elektroden 172, 174 verbunden, wobei die exakte Positionierung der Kontaktplatine 124 über zwei Platinenarme 176, 178 erfolgt, in denen jeweils eine Passausnehmung 180, 182 vorgesehen ist, die in der richtigen Bezugsposition von Passstiften 154 durchsetzt sind, die in den Taschen 59, 61 vorgesehen sind.

Figur 39 zeigt eine Variante des Ausführungsbeispiels gemäß Figur 38. Bei diesem Ausführungsbeispiel ist die Kontaktplatine 124 mit vier gleichmäßig am Umfang verteilten Platinenarmen 176, 178, 184, 186 ausgeführt, in denen wiederum jeweils eine Passausnehmung 188 vorgesehen ist, denen entsprechende Passstifte 154 in den Taschen 59, 61 zugeordnet sind. Mit einem derartigen Konzept ist eine genauere Relativpositionierung der Sensoren 22, 24 mit Bezug zu den Kontaktplatinen 124, 126 und auch mit Bezug zu den Taschen 59, 61 ermöglicht.

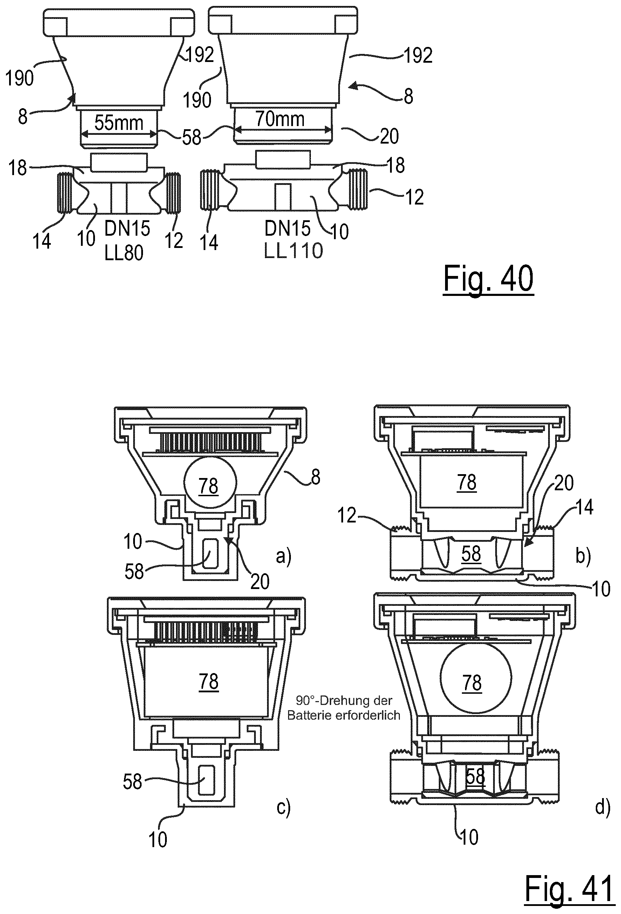

Insbesondere bei geringen Nennweiten und kurzen Messkanallängen (DN 15/ LL80) kann es schwierig werden, mit den Werkzeugen zum Verbinden des Durchflussmessers 1 mit der Rohrleitung an die Anschlussstutzen 12, 14 zu gelangen, da beispielsweise ein Schraubenschlüssel mit dem Messgehäuse 2 kollidiert. Um ein Ansetzen eines Schraubenschlüssels oder dergleichen zu vereinfachen, ist bei einem alternativen erfindungsgemäßen Konzept vorgesehen, das Messgehäuse 2 gemäß der Darstellung in Figur 40 zum Strömungskanal 10 hin zu konifizieren. In der Figur 40 sind zwei Durchflussmesser in einer aufgelösten Darstellung gezeigt, in der das Messgehäuse 2 noch nicht mit dem Strömungskanal 10 (Gehäuse) verbunden ist. Je nach Länge (LL80 / LL110) ändert sich auch entsprechend die Länge l der Ausnehmung im Flansch 18, durch die hindurch der in der Figur 40 sichtbare Messkanaleinsatz 20 eingesetzt werden kann. Dieser ist gemäß den vorbeschriebenen Ausführungsbeispielen ausgeführt. Wie in der Darstellung gemäß Figur 40 gut sichtbar ist, ist das Steuergehäuse 8 insbesondere hin zu den Anschlussstutzen 12, 14 konifiziert, wobei durch die schräg angestellten Wandungsflächen 190, 192 des Steuergehäuses 8 das Ansetzen eines Werkzeugs vereinfacht ist. Dabei hängt die maximale Konifizierung von der Länge des Durchflussmessers 1 ab. Bei dem in Figur 40 links dargestellten Ausführungsbeispiel mit vergleichsweise geringer Länge ist die Konifizierung stärker ausgeprägt als bei einem vergleichsweise langen Messkanal 58, wie er in Figur 40 rechts dargestellt ist. Bei derart langen Messkanälen 58 stellt sich das eingangs geschilderte Problem jedoch nicht in so starkem Maße dar, da die Anschlussstutzen 12, 14 dann eher axial über das Steuergehäuse 8 hinausstehen und somit das Ansetzen des Werkzeugs einfacher als bei kurzen Durchflussmessern ist.

Prinzipiell ist man auch bestrebt, möglichst große Batterien 78 zu verbauen, da dann die Standzeit des Durchflussmessers 1 verbessert ist. Dementsprechend ist man bestrebt, anstelle der herkömmlichen C-Zellen-Batterien D-Zellen-Batterien mit verbesserter Kapazität und Leistung einzusetzen, die jedoch wesentlich voluminöser bauen als die kompakteren C-Zellen-Batterien. Dies ist recht anschaulich in Figur 41 gezeigt. Im oberen Bereich ist ein Durchflussmesser mit einer vergleichsweise kurzen Länge (LL80) gezeigt, wobei in das konifizierte Steuergehäuse 8 eine C-Zellen-Batterie 78 eingesetzt ist. Diese ist in an sich bekannter Weise so angeordnet, dass ihre Längsachse parallel zur Durchströmungsrichtung des Messkanals 58 verläuft. D.h., in Figur 41a) ist die Stirnseite der Batterie 78 und in Figur 41b) die Seitenansicht der Batterie 78 und auch des Messkanals 58 gezeigt. In dieser Darstellung erkennt man auch recht anschaulich die Begrenzung des Messkanalquerschnitts durch die Profilkörper 168 der Inserts 4, 6.

In den Figuren 41c), 41d) sind entsprechende Darstellungen mit D-Zellen-Batterien 78 gezeigt. Aufgrund des wesentlich größeren Volumens dieser Batterietypen muss entsprechend auch das Steuergehäuse 8 voluminöser ausgeführt werden. Des Weiteren ist es in den meisten Fällen erforderlich, die Orientierung der Batterie 78 gemäß den Darstellungen in Figur 41c) und 41d) dahingehend zu ändern, dass die Längsachse der zylindrischen D-Zellen-Batterie 78 quer zur Messkanalachse angeordnet ist. D.h. die Batterie 78 muss beim Ausführungsbeispiel gemäß den Figuren 41c) und 41d) um 90° gegenüber der Position der Batterie 78 beim Ausführungsbeispiel gemäß den Figuren 41a) und 41b) verändert werden. Dies geht mit einem erheblichen Mehraufwand einher, so dass der Wechsel auf eine andere Batterie zur Verbesserung der Standzeit mit gewissen Nachteilen erkauft wird, die in der Umkonstruktion des Steuergehäuses 8 liegen.

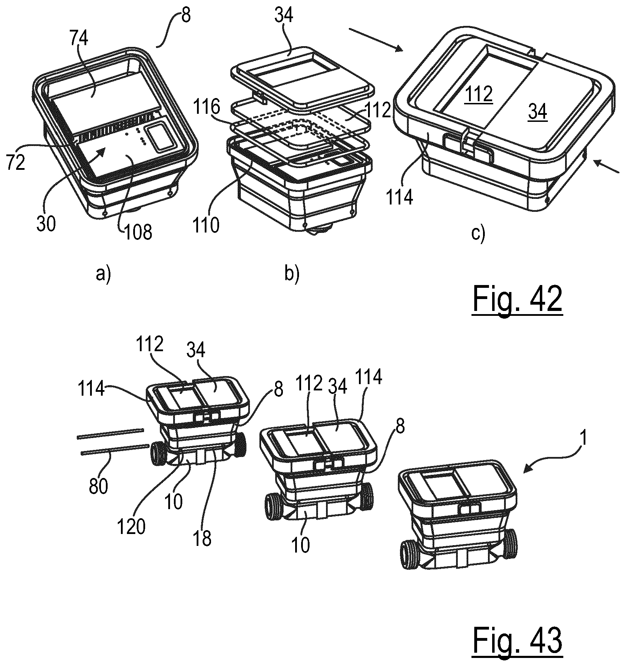

Anhand der Figur 42 sei nochmals kurz das displayseitige Verschließen des Steuergehäuses 8 erläutert. Wie vorstehend beschrieben, wird bei der Montage des Durchflussmessers 1 die Steuereinheit 30 mit dem in dieser Darstellung nicht sichtbaren Haupt-PCB 72 und der EDU 74 sowie dem Kommunikationsmodul 108 mit den Sensoren 22, 24 und deren Kontaktierungselemente in den Innenraum des Steuergehäuses 8 eingesetzt. Im nächsten Arbeitsschritt werden dann wie in Figur 42b dargestellt, die Dichtung 116 in den Deckelflansch 110 eingelegt, das Abdeckglas 112 aufgesetzt und ggf. noch der Gehäusedeckel 34 (Cap) aufgesetzt, wobei dieser beispielsweise mit dem Deckelflansch 110 verrastet sein kann, um das Abdeckglas 112 und den Gehäusedeckel 34 vorzufixieren.

Nach dieser Vormontage wird der Verschieberahmen 114 mit seinen beiden Rahmenstücken auf den Deckelflansch 110 und die darauf montierten Komponenten aufgesetzt und zusammengeschoben bis die beiden Verschieberahmenstücke mit einander verrasten und den Gehäusedeckel 34 und das Abdeckglas 112 lagefixieren.

Die Verbindung des Messgehäuses 2 mit dem Strömungskanal 10 ist in Figur 43 dargestellt. Wie vorstehend erläutert, wird das Messgehäuse 2 mit dem Messkanaleinsatz 20 in die Ausnehmung 16 eingesetzt, wobei der Boden 120 des Steuergehäuses 8 auf dem Flansch 18 des Strömungskanals 10 aufliegt. Der Verschieberahmen 114 ist dabei beispielsweise noch nicht verriegelt und auch die beiden Verbindungsbolzen 80 noch nicht eingesetzt. Im nächsten Arbeitsschritt werden letztere zur kraft- und formschlüssigen Verbindung des Strömungskanals 10 mit dem Messgehäuse 2 bzw. dem Steuergehäuse 8 durch Einschieben der Verbindungsbolzen 80 verbunden. In einem abschließenden Verfahrensschritt (rechts in Figur 43) wird dann der Verschieberahmen 114 - wie anhand von Figur 42 erläutert - zusammengeschoben und verrastet, so dass alle Komponenten des Durchflussmessers 1 zuverlässig relativ zu einander lagepositioniert sind.

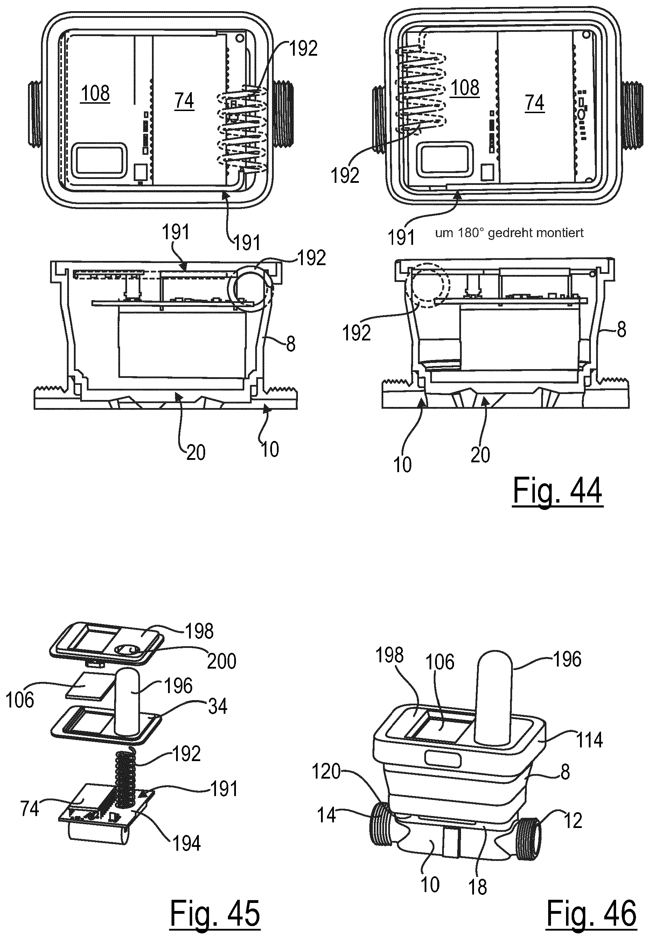

Für den Fall, dass ein Kommunikationsmodul 108 vorgesehen ist und dies mit eine leistungsfähigen Antenne 191 versehen werden soll, wird diese, wie in Figur 44 dargestellt, vorzugsweise in das Steuergehäuse 8, d.h. unterhalb des Abdeckglases 112 positioniert. Es sei angenommen, dass die Antenne 191 mit einer Antennenwicklung 193 versehen ist, die mit dem Kommunikationsmodul 108 bzw. der Kommunikationsplatine 194 kontaktiert ist. Aufgrund des vergleichsweise geringen Bauraums oberhalb des Kommunikationsmoduls 108 bzw. der Kommunikationsplatine 194 kann die integrierte Antenne 191 so verlegt werden, dass sie trotz der mit einem vergleichsweise großen Durchmesser ausgeführten Antennenwicklung 193 oberhalb der durch die EDU 74 und die Kommunikationsplatine 194 vorgegebene Ebene positioniert werden kann. D.h. gemäß dem Ausführungsbeispiel in Figur 44 links ist die Antennenwicklung 193 seitlich im Bereich der EDU 74 angeordnet. Im Ausführungsbeispiel gemäß Figur 44 rechts ist die Antennenwicklung 193 im Bereich der Kommunikationsplatine 194 angeordnet, wobei der Antennendraht zunächst seitlich um die Kommunikationsplatine 194 und die daneben liegende EDU 74 verläuft.

In den Figuren 45 und 46 ist eine alternative Lösung dargestellt. Bei dieser Variante muss die Antenne 191 nicht bündig integriert sein, sondern kann über das Steuergehäuse 8 hinausstehen. Die Antennenwicklung 193 ist dabei vertikal zur Großfläche der Kommunikationsplatine 194 angeordnet, wobei allerdings gemäß Figur 46 zum Schutz vor äußeren Beschädigungen an einem Gehäusedeckel 34, der das Steuergehäuse 8 nach oben hin (Ansicht nach Figur 46) abschließt, eine nach außen geschlossene Antennenaufnahme 196 ausgeführt ist, in die die Antennenwicklung 193 eintaucht, so dass die Antenne 191 nach außen hin überdeckt ist, aufgrund der vertikalen Anordnung jedoch ein optimales Sende-Empfangs-Verhalten hat.

Bei diesem Ausführungsbeispiel ist der Gehäusedeckel 34 mit einem Displayfenster 106 versehen, wobei auf den Gehäusedeckel 34 zusätzlich noch eine Cap 198 aufgesetzt ist, die beispielsweise als ID-Plate wirkt oder mit sonstigen Informationen versehen sein kann. Diese Cap 198 hat eine Ausnehmung 200, durch die hindurch sich die Antennenaufnahme 196 mit der darin angeordneten Antennenwicklung 193 erstreckt. Im Übrigen entspricht das in Figur 45 dargestellte Ausführungsbeispiel den vorbeschriebenen Ausführungsbeispielen, so dass weitere Erläuterungen entbehrlich sind.

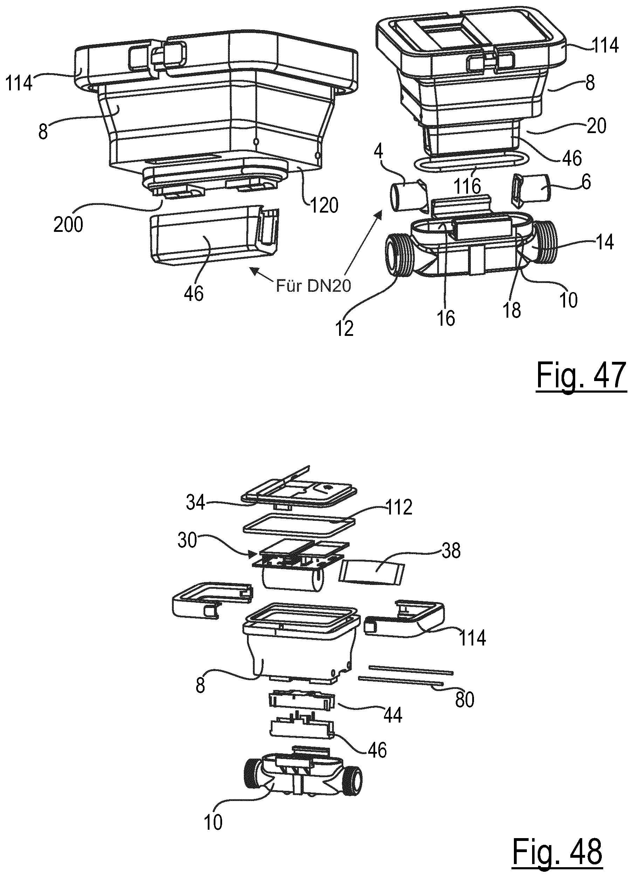

In Figur 47 ist ein weiteres Ausführungsbeispiel eines Durchflussmessers 1 dargestellt, bei dem in Abwandlung der vorbeschriebenen Ausführungsbeispiele das Messkanaloberteil 44 sozusagen in das Steuergehäuse 8 integriert ist. Mit anderen Worten gesagt, die Passelemente des Messkanaloberteils 44 sind bei dem Ausführungsbeispiel gemäß Figur 47 am Boden 120 ausgebildet. Diese Passelemente sind in der Darstellung gemäß Figur 47 beispielhaft mit dem Bezugszeichen 200 versehen und ergänzen sich mit dem Messkanalunterteil 46 zu dem Messkanal 58 bzw. dem Messkanaleinsatz 20, der gemäß der Darstellung in Figur 47 rechts in die Ausnehmung 16 im Flansch 18 des Strömungskanals 10 eingesetzt wird. Bei diesem Ausführungsbeispiel sind dann ebenfalls die beiden Reflektoren 52a, 52b im Messkanalunterteil 46 vorgesehen, während die Passelemente 200 auch den Reflektor 52c aufnehmen, so dass wiederum ein W-förmiger Signalpfad 64 realisiert werden kann.

Die Montage erfolgt ähnlich wie bei den oben beschriebenen Ausführungsbeispielen. In einem ersten Verfahrensschritt werden die beiden Inserts 4, 6 durch die Ausnehmung 16 hindurch in den Strömungskanal 10 eingesetzt und in Axialrichtung hin zu den Anschlussstutzen 12, 14 verschoben, so dass Raum zum Einsetzen des Messkanaleinsatzes 20 mit dem Messkanalunterteil 46 und dem am Boden 120 des Steuergehäuses 8 ausgebildeten Passelementen 200 geschaffen wird. Durch das Einsetzen ergänzen sich die am Steuergehäuse 8 gehaltenen Elemente (Passelemente 200 und Messkanalunterteil 46) mit den Inserts 4, 6 zum Messkanaleinsatz 20, wobei die Abdichtung nach außen hin über die Dichtung 116 erfolgt.

Bei einem Wechsel der Nennweite müssen dann im Prinzip lediglich der Strömungskanal 10 und die Inserts 4, 6 ausgewechselt werden, während die übrigen Komponenten beigehalten werden können.

Bei den vorbeschriebenen Ausführungsbeispielen sind das Steuergehäuse 8 und der Messkanaleinsatz 20 aus einem anderen Material als der Strömungskanal 10 gefertigt. Dieser wird üblicherweise aus einer Gusslegierung, beispielsweise aus Messing, hergestellt.

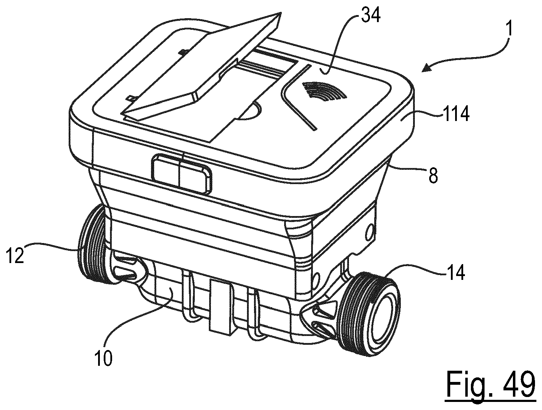

**In** den Figuren 48, 49 ist ein Ausführungsbeispiel gezeigt, bei dem ein Composite-Strömungskanal 10 mit dem Steuergehäuse 8 verbunden ist, so dass im Prinzip ein Durchflussmesser 1 bereitgestellt wird, der in den wesentlichen Bauelementen aus sehr leichtem und widerstandsfähigem faserverstärktem Kunststoff oder einem sonstigen Composite-Material besteht. Die Herstellung dieses aus einem Composite-Material bestehenden Strömungskanals 10 kann nach einem mehrstufigen Spritzgießverfahren erfolgen, wie es beispielsweise anhand der Figur 24 beschrieben wurde, so dass weitere Ausführungen entbehrlich sind.

Bei den vorbeschriebenen Ausführungsbeispielen sind für jede Kontaktierung eines Sensors 22, 24 individuelle Formkörper 68, 70 vorgesehen. Prinzipiell können auch diese Formkörper 68, 70 zu Profilteilen zusammengefügt werden, so dass beide Sensoren 22, 24 über einen gemeinsamen Profilkörper kontaktiert werden, der mit unterschiedlichen Leiterbahnen 90, 92 belegt ist, um eine individuelle Ansteuerung der Sensoren 22, 24 zu ermöglichen.

Offenbart ist ein Durchflussmesser mit einem optimierten Durchflussquerschnitt.

### Bezugszeichenliste:

- 1: Durchflussmesser
- 2: Messgehäuse
- 4: Einlass-Insert
- 6: Auslass-Insert
- 8: Steuergehäuse
- 10: Strömungskanal
- 12: Anschlussstutzen
- 14: Anschlussstutzen
- 16: Ausnehmung
- 18: Flansch
- 20: Messkanaleinsatz
- 22: Sensor
- 24: Sensor
- 26: Sensorhalterung
- 28: Gehäuseflansch
- 30: Steuereinheit
- 32: Steuergehäuse
- 34: Gehäusedeckel
- 36: Tragstruktur
- 38: Trocknungsmittel
- 40: Display
- 42: Messkanalabschnitt
- 44: Messkanaloberteil
- 46: Messkanalunterteil
- 48: Informationsplatte
- 52: Reflektor
- 54: Leitung
- 56: Leitung
- 58: Messkanal
- 59: Tasche
- 60: Ausnehmung
- 61: Tasche
- 62: Ausnehmung
- 64: Signalpfad
- 66: Leitrippe
- 68: Formkörper
- 70: Formkörper
- 72: Haupt-PCB
- 74: EDU
- 78: Batterie
- 80: Verbindungsbolzen
- 82: SMD-Federkontakt
- 86: Referenzzapfen
- 88: Referenzausnehmung
- 90: Leiterbahn
- 92: Leiterbahn
- 94: Basis
- 96: Kontaktarm
- 98: Gehäusedichtung
- 100: Stützzapfen
- 102: Zapfenausschnitt
- 103: Passbolzen
- 104: Abdeckung
- 106: Displayfenster
- 108: Kommunikationsmodul
- 109: Führung
- 110: Deckelflansch
- 112: Abdeckglas
- 114: Verschieberahmen
- 116: Dichtung
- 118: Dichtung
- 120: Boden
- 124: Kontaktplatine
- 126: Kontaktplatine
- 128: Stütze
- 130: Aufnahmeraum
- 132: Messkanaladapter
- 134: Passausnehmung
- 136: Einkoppelfläche
- 138: Auskoppelfläche
- 140: Stufe
- 142: Seitenwandung
- 144: Seitenwandung
- 146: Konsole
- 148: Passausnehmung
- 149: Bodenfläche
- 150: Wandung
- 152: Wandung
- 153: Durchbruch
- 154: Passstift
- 156: Passvorsprung
- 160: Ausnehmung
- 162: Passstift
- 164: Nut
- 166: Rohrstück
- 168: Profilkörper
- 170: Kontaktstück
- 172: Elektrode
- 174: Elektrode
- 176: Platinenarm
- 178: Platinenarm
- 180: Passausnehmung
- 182: Passausnehmung
- 184: Platinenarm
- 186: Platinenarm
- 188: Passausnehmung
- 190: Wandungsfläche
- 191: Antenne
- 192: Wandungsfläche
- 193: Antennenwicklung
- 194: Kommunikationsplatine
- 196: Atennenaufnahme
- 198: Cap
- 200: Passelement
- 200: Ausnehmung

## Patentansprüche

1. Durchflussmesser mit einem an eine von einem Fluid durchströmte Rohrleitung ansetzbaren Strömungskanal (10), an dem eine Messeinheit gehalten ist, die zumindest zwei zu einander beabstandete, als Ultraschall-Wandler ausgebildete Sensoren (22,24) hat, die ihre Messsignale durch eine Ausnehmung (16) des Strömungskanals (10) hindurch ein- bzw. auskoppeln, und mit einer in einem Steuergehäuse (8) aufgenommenen Steuereinheit (30) zur Ansteuerung der Sensoren (22, 24) und zur Verarbeitung der Messsignale, **dadurch gekennzeichnet, dass** jeder Sensor (22, 24) mit jeweils einer Kontaktplatine (124, 126) kontaktiert ist, die ihrerseits mit einem Haupt-PCB (72) der Steuereinheit (30) verbunden sind, wobei die Sensoren (22, 24) auf schräg angestellten Stützflächen eines Messkanaloberteils (44) befestigt sind.

2. Durchflussmesser nach Patentanspruch 1, wobei die Kontaktierung der Sensoren (22, 24) bzw. der Kontaktplatinen (124, 126) über Leitungen (54) oder über Formkörper, insbesondere Kunststoff-Formkörper (68, 70) mit Leiterbahnen (90, 92) erfolgt.

3. Durchflussmesser nach Patentanspruch 1 oder 2, wobei die Kontaktplatinen (124, 126) mit jeweils einem Sensor (22, 24) verlötet oder verklebt sind, wobei Sensorelektroden (172, 174) im Bereich einer vom Boden (120) des Steuergehäuses (8) oder eines Messkanaloberteils (44) entfernten Großfläche und/oder entlang einer Umfangswandung des Sensors (22, 24) ausgebildet sind.

4. Durchflussmesser nach einem der Patentansprüche 1 bis 3, wobei die Kontaktplatinen (124, 126) jeweils formschlüssig, insbesondere über Passausnehmungen und darin eingreifende Passstifte (154) mit Bezug zu dem Steuergehäuse (8) oder dem Messkanaloberteil (44) lagepositioniert ist.

5. Durchflussmesser nach einem der vorhergehenden Patentansprüche, wobei das Steuergehäuse (8) einen Gehäusedeckel (34) hat, der die Sicht auf ein Display (40) (EDU 74) freigibt.

6. Durchflussmesser nach Patentanspruch 5, wobei der Gehäusedeckel (34) über einen mehrteiligen Verschieberahmen (114) mit dem Steuergehäuse (8) verbunden ist.

7. Durchflussmesser nach einem der vorhergehenden Patentansprüche, wobei das Steuergehäuse (8) zu den Anschlussstutzen (12, 14) hin konifiziert ist.

8. Durchflussmesser nach einem der vorhergehenden Patentansprüche, wobei eine Batterie (78) an einer zum Messkanaleinsatz (20) hin weisenden Großfläche eines Haupt-PCB (72) kontaktiert/befestigt ist.

9. Durchflussmesser nach Patentanspruch 8, wobei die Batterie (78) mit ihrer Längsachse quer oder parallel zur Durchströmungsrichtung des Steuergehäuses (8) angeordnet ist.

10. Durchflussmesser nach einem der vorhergehenden Patentansprüche, wobei im Steuergehäuse (8) auch eine Displayeinheit (EDU 74) und ein Kommunikationsmodul (108) aufgenommen sind, die gemeinsam etwa im Parallelabstand zu einem Gehäusedeckel (34) hin versetzt mit Bezug zu einem Haupt-PCB (72) angeordnet sind.

11. Durchflussmesser nach Patentanspruch 10, wobei das Kommunikationsmodul (108) mit einer in das Steuergehäuse (8) integrierten Antenne (191) ausgeführt ist, die vom Gehäusedeckel (34) überdeckt ist.

12. Durchflussmesser nach Patentanspruch 1, wobei die Befestigung stoffschlüssig, vorzugsweise durch Kleben oder durch Verspannung erfolgt.

13. Durchflussmesser nach einem der vorhergehenden Patentansprüche, mit einem Einlass-Insert und/oder einem Auslass-Insert (4, 6), die an den Messkanalabschnitt (42) angesetzt und ebenfalls durch die Ausnehmung (16) hindurch eingesetzt sind, wobei der Messkanalabschnitt (42) vorzugsweise im Wesentlichen durch ein Messkanalunterteil (46) und ein Messkanaloberteil (44) oder das Steuergehäuse (8) begrenzt ist.

14. Durchflussmesser nach Patentanspruch 13, wobei beide Inserts (4, 6) baugleich sind.

15. Durchflussmesser nach Patentanspruch 13 oder 14, wobei das Messkanalunterteil (46) und/oder das Messkanaloberteil (44) für unterschiedliche Nennweiten (DN) des Strömungskanals (10) gleichbleiben und eine Anpassung an die Nennweite (DN) über die Inserts (4, 6) erfolgt.

## Claims

1. A flow meter with a flow channel (10) that can be attached to a pipe through which a fluid flows, on which a measuring unit is held, which has at least two sensors (22, 24) spaced apart from each other and designed as ultrasonic transducers which couple their measuring signals in and out through a recess (16) in the flow channel (10), and a control unit (30) housed in a control housing (8) for controlling the sensors (22, 24) and for processing the measuring signals, **characterised in that** each sensor (22, 24) is contacted by a respective contact board (124, 126) which in turn is connected to a main PCB (72) of the control unit (30), wherein the sensors (22, 24) are fastened to inclined support surfaces of a measuring channel upper part (44).

2. The flow meter according to claim 1, wherein the sensors (22, 24) or the contact boards (124, 126) are contacted via lines (54) or via moulded bodies, in particular plastic moulded bodies (68, 70) with conductor tracks (90, 92).

3. The flow meter according to claim 1 or 2, wherein the contact plates (124, 126) are soldered or glued to a respective sensor (22, 24), wherein sensor electrodes (172, 174) are formed in the area of a large surface remote from the bottom (120) of the control housing (8) or of an upper part (44) of the measuring channel and/or along a peripheral wall of the sensor (22, 24).

4. The flow meter according to one of claims 1 to 3, wherein the contact plates (124, 126) are each positionally fixed in relation to the control housing (8) or the upper part of the measuring channel (44) in a form-fitting manner, in particular by means of fitting recesses and fitting pins (154) engaging therein.

5. The flow meter according to one of the preceding patent claims, wherein the control housing (8) has a housing cover (34) which allows a view of a display (40) (EDU 74).

6. The flow meter according to patent claim 5, wherein the housing cover (34) is connected to the control housing (8) via a multi-part sliding frame (114).

7. The flow meter according to one of the preceding patent claims, wherein the control housing (8) is tapered towards the connection pieces (12, 14).

8. The flow meter according to one of the preceding patent claims, wherein a battery (78) is contacted/fastened to a large surface of a main PCB (72) facing the measuring channel insert (20).

9. The flow meter according to patent claim 8, wherein the battery (78) is arranged with its longitudinal axis transverse or parallel to the flow direction of the control housing (8).

10. The flow meter according to one of the preceding patent claims, wherein the control housing (8) also accommodates a display unit (EDU 74) and a communication module (108), which are arranged together at approximately parallel distances offset towards a housing cover (34) with respect to a main PCB (72).

11. The flow meter according to claim 10, wherein the communication module (108) is designed with an antenna (191) integrated into the control housing (8), which is covered by the housing cover (34).

12. The flow meter according to claim 1, wherein the fastening is made by a material bond, preferably by gluing or by clamping.

13. The flow meter according to one of the preceding patent claims, with an inlet insert and/or an outlet insert (4, 6) which are attached to the measuring channel section (42) and are also inserted through the recess (16), wherein the measuring channel section (42) is preferably essentially delimited by a measuring channel lower part (46) and a measuring channel upper part (44) or the control housing (8).

14. The flow meter according to claim 13, wherein both inserts (4, 6) are identical in construction.

15. The flow meter according to claim 13 or 14, wherein the measuring channel lower part (46) and/or the measuring channel upper part (44) remain the same for different nominal diameters (DN) of the flow channel (10) and adaptation to the nominal diameter (DN) is effected via the inserts (4, 6).

## Revendications

1. Débitmètre avec un canal d'écoulement (10) pouvant être appliqué sur une tuyauterie traversée par un fluide, canal sur lequel une unité de mesure est maintenue, qui présente au moins deux capteurs (22, 24) espacés l'un de l'autre, conçus en tant que transducteurs à ultrasons, qui couplent ou découplent leurs signaux de mesure à travers un évidement (16) du canal d'écoulement (10), et avec un dispositif de commande (30) logé dans un boîtier de commande (8) pour commander les capteurs (22, 24) et pour traiter les signaux de mesure, **caractérisé en ce que** chaque capteur (22, 24) est respectivement en mis contact avec une plaque de contact (124, 126) qui est elle-même connectée à un circuit imprimé principal (72) du dispositif de commande (30),
dans lequel les capteurs (22, 24) sont fixés sur des surfaces d'appui d'une partie supérieure de canal de mesure (44) disposées obliquement.

2. Débitmètre selon la revendication 1, dans lequel la mise en contact des capteurs (22, 24) ou des plaques de contact (124, 126) s'effectue par l'intermédiaire de lignes (54) ou par l'intermédiaire de corps moulés, en particulier des corps moulés en plastique (68, 70) avec des pistes conductrices (90, 92).

3. Débitmètre selon la revendication 1 ou 2, dans lequel les plaques de contact (124, 126) sont respectivement soudées ou collées à un capteur (22, 24), dans lequel des électrodes de capteur (172, 174) sont formées dans la zone d'une grande surface éloignée du fond (120) du boîtier de commande (8) ou d'une partie supérieure de canal de mesure (44) et/ou le long d'une paroi périphérique du capteur (22, 24).

4. Débitmètre selon l'une quelconque des revendications 1 à 3, dans lequel les plaques de contact (124, 126) sont respectivement positionnées par complémentarités de forme, en particulier par des évidements d'ajustage et des goupilles d'ajustage (154) s'engageant dans ceux-ci par rapport au boîtier de commande (8) ou à la partie supérieure de canal de mesure (44).

5. Débitmètre selon l'une quelconque des revendications précédentes, dans lequel le boîtier de commande (8) présente un couvercle de boîtier (34) qui libère la vue sur un écran (40) (EDU 74).

6. Débitmètre selon la revendication 5, dans lequel le couvercle de boîtier (34) est connecté au boîtier de commande (8) par l'intermédiaire d'un cadre mobile en plusieurs parties (114).

7. Débitmètre selon l'une quelconque des revendications précédentes, dans lequel le boîtier de commande (8) est conique vers les tubulures de raccordement (12, 14).

8. Débitmètre selon l'une quelconque des revendications précédentes, dans lequel une batterie (78) est en contact/fixée sur une grande surface d'un circuit imprimé principal (72) tournée vers l'entrée de canal de mesure (20).

9. Débitmètre selon la revendication 8, dans lequel la batterie (78) est disposée avec son axe longitudinal transversalement ou parallèlement à la direction d'écoulement du boîtier de commande (8).

10. Débitmètre selon l'une quelconque des revendications précédentes, dans lequel une unité d'affichage (EDU 74) et un module de communication (108) sont également logés dans le boîtier de commande (8), unité et module qui sont disposés ensemble approximativement à une distance parallèle à un couvercle de boîtier (34) décalés par rapport à une carte de circuit imprimé principale (72).

11. Débitmètre selon la revendication 10, dans lequel le module de communication (108) est réalisé avec une antenne (191) intégrée dans le boîtier de commande (8) et recouverte par le couvercle de boîtier (34).

12. Débitmètre selon la revendication 1, dans lequel la fixation s'effectue par accouplement de matière, de préférence par collage ou par serrage.

13. Débitmètre selon l'une quelconque des revendications précédentes, avec un insert d'entrée et/ou un insert de sortie (4, 6) qui sont placés sur la section de canal de mesure (42) et également insérés à travers l'évidement (16), dans lequel la section de canal de mesure (42) est de préférence délimitée sensiblement par une partie inférieure de canal de mesure (46) et une partie supérieure de canal de mesure (44) ou le boîtier de commande (8).

14. Débitmètre selon la revendication 13, dans lequel les deux inserts (4, 6) sont de construction identique.

15. Débitmètre selon la revendication 13 ou 14, dans lequel la partie inférieure de canal de mesure (46) et/ou la partie supérieure de canal de mesure (44) restent identiques pour différents diamètres nominaux (DN) du canal d'écoulement (10) et une adaptation au diamètre nominal (DN) s'effectue par l'intermédiaire des inserts (4, 6).
